# EUROPEAN PATENT SPECIFICATION

(11) **EP 1 037 719 B1**
(45) Date of publication and mention of the grant of the patent: **24.08.2005**
(21) Application number: 98952079.6
(22) Date of filing: 13.10.1998
(51) Int. Cl.: B05D 3/02, C23C 22/36, C09D 5/12

(54) **COMPOSITION AND PROCESS FOR MULTI-PURPOSE TREATMENT OF METAL SURFACES**
ZUSAMMENSETZUNG UND VERFAHREN ZUR MEHRZWECKBEHANDLUNG VON METALLOBERFLÄCHEN
COMPOSITION ET PROCEDE DE TRAITEMENT POLYVALENT DE SURFACES METALLIQUES

(30) Priority: 14.10.1997 US 62095 P
(43) Date of publication of application: 27.09.2000
(73) Proprietor: Henkel Kommanditgesellschaft auf Aktien, 40191 Düsseldorf (DE)
(72) Inventor: GOODREAU, Bruce, H., Romeo, MI 48065 (US); PRESCOTT, Thomas, J., Troy, MI 48098 (US)
(74) Representative: Gillam, Francis Cyril
(86) International application number: PCT/US1998/020933
(87) International publication number: WO 1999/019083

(56) References cited:
- EP-A- 0 812 933
- WO-A-90/12902
- WO-A-95/09934
- WO-A-95/33869
- WO-A-96/07772
- WO-A-97/04145
- DE-A- 4 317 217
- DE-A- 4 412 138
- FR-A- 2 255 393
- US-A- 5 298 289

## Description

### BACKGROUND OF THE INVENTION

This invention relates to aqueous liquid compositions and processes using such liquids for chemically treating metal surfaces to form a coating layer thereon. The com-positions are preferably free from chromium and other heavy metals that cause serious pollution problems in some prior art treatment compositions. Coating layers formed in a process according to the invention can be effective for at least three different purposes: increasing adhesion of and corrosion protection from subsequently applied paints or other protective coatings with a largely organic matrix; without any subsequently applied protective coating, providing at least temporary protection against staining and development of white rust on zinc or zinc alloy surfaces treated in a process according to the invention; and providing sufficient lubricity to permit roll forming of sheet metals treated in a process according to the invention without the need for additional liquid lubricants such as oil.

Traditionally, most zinciferous and/or aluminiferous surfaces have been passivated by chemical treatment with aqueous liquid compositions containing at least some hexavalent chromium. Concerns about environmental pollution have led in recent years to development and disclosure of some chromium-free treatments. However, there is still room for further improvements with respect to, among other things, cost, ease of use, and versatility of coatings formed. Conventional rolling oil lubricants also can cause pollution, cost, and fire hazard problems.

Various alternative and/or concurrent objects of this invention are: (i) to provide an entirely or substantially chromium-free composition and process for passivating that will provide an adequate corrosion resistance in comparison with previously used high quality chromate containing passivating agents; (ii) to provide an economical passivating treatment; (iii) to reduce pollution potential; (iv) to provide a solid coating that provides adequate lubrication for roll forming of sheet metal without the need for supplemental organic liquid lubricant; (v) to provide paint-adhesion improvements by the same coating as is used for passivating; and (vi) to reduce costs of overall operations.

Except in the claims and the operating examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred, however. Also, throughout this specification, unless expressly stated to the contrary: percent, "parts of", and ratio values are by weight; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not preclude chemical interactions among the constituents of a mixture once mixed; specification of materials in ionic form implies the presence of sufficient counterions to produce electrical neutrality for the composition as a whole; any counterions thus implicitly specified should preferably be selected from among other constituents explicitly specified in ionic form, to the extent possible; otherwise such counterions may be freely selected, except for avoiding counterions that act adversely to the objects of the invention; the terms "molecule" and "mole" and their grammatical variations may be applied to ionic, elemental, or any other type of chemical entities defined by the number of atoms of each type present therein, as well as to substances with well-defined neutral molecules; the first definition of an acronym or other abbreviation applies to all subsequent uses herein of the same abbreviation and applies *mutatis mutandis* to normal grammatical variations of the initially defined abbreviation; the term "paint" includes all like materials that may be designated by more specialized terms such as lacquer, enamel, varnish, shellac, topcoat, and the like; and the term "polymer" includes "oligomer", "homopolymer", "copolymer", "terpolymer", and the like.

### BRIEF SUMMARY OF THE INVENTION

It has been found that one or more of the objects stated above for the invention can be achieved by use of an aqueous liquid composition that comprises, preferably consists essentially of, or more preferably consists of, water and:
(A) a concentration of a component of dissolved phosphorus-containing anions;
(B) a concentration of a dissolved component selected from the group consisting of simple and complex anions containing fluorine atoms;
(C) a concentration of a component of dissolved and/or stably dispersed organic molecules including phenolic ring moieties with aminomethyl substituents thereon as more fully described in one or more of the following U. S. Patents: 4,376,000 of March 8, 1983 to Lindert; 4,433,015 of Feb. 21, 1984 to Lindert; 4,457,790 of July 3, 1984 to Lindert; 4,517,028 of May 14, 1984 to Lindert; 5,116,912 of May 26, 1992 to Lindert et al.; 5,068,299 of Nov. 26, 1991 to Lindert et al.; and 4,970,264 of Nov. 13, 1990 to Lindert et al.; and
(D) a concentration of a component of dissolved, stably dispersed, or both dissolved and stably dispersed film-forming molecules, said molecules not being part of any of immediately previously recited components (A) through (C); and, optionally, one or more of the following components:
(E) a concentration of a component of stably dispersed solid material that in isolated form has a coefficient of static friction, measured between two pieces of the solid material itself or between the solid material and cold rolled steel, that is not greater than 0.35, this solid material not being part of any of immediately previously recited components (A) through (D).
   The composition may further comprise:
(F) a component of surfactant and/or of dispersing agent for one of components (D) or (E) that is not part of any of immediately previously recited components (A) through (E);
(G) a component of preservative agent that is not part of any of immediately previously recited components (A) through (F); and
(H) a component of colorant that is not part of any of immediately previously recited components (A) through (H).

The phrase "stably dispersed" when used herein to describe an insoluble component in a liquid continuous phase, as in the definitions of components (C), (D), and (E) recited above, means that the insoluble component is not spontaneously concentrated into any separate liquid or solid phase perceptible with unaided human vision to be distinct from, but in contact with, the liquid continuous phase within a period of observation of the combination of stably dispersed insoluble component and liquid continuous phase for 10 hours, or preferably, with increasing preference in the order given, for 1, 3, 5, 10, 30, 60, 90, 120, 240, or 360 days when stored without mechanical disturbance at 20 °C in dispersed form. Molecules are to be understood as "film forming" for the purposes of this description if, when a homogeneous solution and/or suspension of the molecules in water containing at least 20 % of the molecules is dried at a temperature of at least 25 °C from a liquid film thickness not greater than 1 millimeter, a continuous and coherent film that is solid at 25 °C is produced.

Various embodiments of the.invention include working compositions for direct use in treating metals, make-up concentrates from which such working compositions can be prepared by dilution with water and/or by mixing with other concentrate compositions, replenisher concentrates suitable for maintaining optimum performance of working compositions according to the invention, processes for treating metals with a working composition according to the invention, and extended processes including additional steps that are conventional *per se*, such as cold working, cleaning, rinsing, and subsequent painting or some similar overcoating process that puts into place an organic binder-containing protective coating over the metal surface treated according to a narrower embodiment of the invention. Articles of manufacture including surfaces treated according to a process of the invention are also within the scope of the invention.

### DETAILED DESCRIPTION OF THE INVENTION

Component (A) is preferably selected from oxygen containing anions in which phosphorus is in its +5 oxidation state. Any oxyacid of phosphorus(V) and/or any salt thereof dissolved in an aqueous liquid composition according to the invention is to be understood for purposes of this description as supplying anions to the aqueous liquid composition to an extent of their full stoichiometric equivalent content, based on the phosphorus and oxygen atoms present, of: HPO₃; acids corresponding to the general formula H₍ₙ₊₂₎PₙO₍₃ₙ₊₁₎, where "n" represents a positive integer; and/or complete and partial salts of all of these immediately previously recited acids, irrespective of whatever extent of ionization may actually occur in the solution. (It is generally believed in the art that all of these acids and/or their anions exist in potential equilibrium with one another, with the equilibrium having a strong preponderance of single-phosphorus-atom-containing entities at low temperatures and low concentrations in water and the entities containing a plurality of phosphorus atoms and the material conventionally written as HPO₃, regarded as a cyclic trimer with the actual formula H₃P₃O₉, becoming more predominant at high temperatures, high concentrations in water, or highly alkaline conditions in aqueous solutions.) At least for reasons of economy, orthophosphoric acid (i.e., H₃PO₄) and its salts are preferred as the source of component (A) in an aqueous liquid composition according to this invention, and the acid is usually preferred in view of the preferred acidic pH value for a working aqueous liquid working composition according to the invention.

Component (B) is preferably selected from the group consisting of anions with one of the chemical formulas F⁻¹, HF₂⁻¹, BF₄⁻¹, AlF₆⁻³, SiF₆⁻², TiF₆⁻², FeF₆⁻³, ZrF₆⁻², and HfF₆⁻². Within this group, the trivalent ions are less preferred than the others, the complex ions including boron, silicon, titanium, zirconium, or hafnium atoms are more preferred than the simpler anions containing only fluorine and optionally hydrogen, and the titanium-containing anions are most preferred. An acid or salt of an acid that contains the elements of one of the above noted chemical formulas of preferred anions is to be understood for purposes of this description as supplying such anions to an aqueous liquid working composition according to the invention in which it is dissolved to the full stoichiometric equivalent of the anions in the acid or salt, irrespective of whatever extent of actual ionization may occur in the solution. As with component (A), an acidic source for component (B) is normally preferred in view of the preferred acid pH of working compositions according to the invention. Irrespective of the source of the anions of component (B) present in an aqueous liquid composition according to the invention, if these anions contain a metallic element or boron, their concentration preferably is such that their total stoichiometric equivalent concentration of metallic elements and boron in moles per kilogram of the total composition, a concentration unit hereinafter usually abbreviated as "M/kg", has a ratio to the concentration of phosphorus atoms in M/kg that is stoichiometrically equivalent to the concentration of component (A) in the same composition that is at least, with increasing preference in the order given, 0.03:1.0, 0.06:1.0, 0.09:1.0, 0.12:1.0, 0.15:1.0, 0.18:1.0, 0.21:1.0, 0.24:1.0, 0.26:1.0, or 0.28:1.0 and independently preferably is not more than, with increasing preference in the order given, 2.0:1.0, 1.5:1.0, 1.0:1.0, 0-8:1.0, 0-6:1.0, 0.50:1.0, 0.40:1.0, 0.35:1.0, or 0.30:1.0. If component (B) does not contain any boron or metal atoms, it preferably has a concentration stoichiometrically equivalent to a concentration of fluorine atoms in M/kg that has a ratio to a concentration of phosphorus atoms in M/kg that is stoichiometrically equivalent to the concentration of component (A) in the same composition that is at least, with increasing preference in the order given, 0.3:1.0, 0.5:1.0, 0.7:1.0, 0.9:1.0, 1.1:1.0, 1.3:1.0, 1.5:1.0, or 1.7:1.0 and independently preferably is not more than, with increasing preference in the order given, 7:1.0, 5:1.0, 4.0:1.0, 3.5:1.0, 3.2:1.0, 2.9:1.0, 2.6:1.0, 2.4:1.0, 2.2:1.0, 2.0:1.0, or 1.8:1.0.

Component (C) is selected from the group consisting of materials (α) and (β), wherein:
(α) consists of polymer molecules each of which has at least one unit conforming to the immediately following general formula (II): 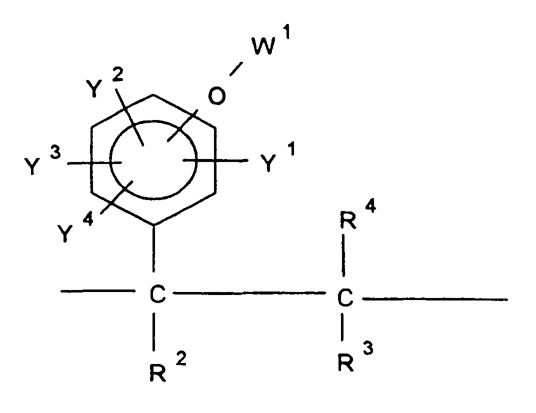 wherein:
   - each of R² through R⁴ is selected, independently of each other and independently from one molecule of the component to another and from one to another unit conforming to this formula when there is more than one such unit in a single polymer molecule, from the group consisting of a hydrogen moiety, an alkyl moiety with from 1 to 5 carbon atoms, and an aryl moiety with from 6 to 18 carbon atoms;
   - each of Y¹ through Y⁴ is selected, independently, except as noted further below, of each other and independently from one molecule of the component to another and from one to another unit conforming to this formula when there is more than one such unit in a single polymer molecule, from the group consisting of: a hydrogen atom moiety; a -CH₂Cl moiety; an alkyl moiety with from 1 to 18 carbon atoms; an aryl moiety with from 6 to 18 carbon atoms; a moiety conforming to the general formula -CR¹²R¹³OR¹⁴, where each of R¹² through R¹⁴ is selected from the group consisting of a hydrogen moiety, an alkyl moiety, an aryl moiety, a hydroxyalkyl moiety, an aminoalkyl moiety, a mercaptoalkyl moiety, and a phosphoalkyl moiety; and a moiety Z that conforms to one of the two immediately following general formulas: 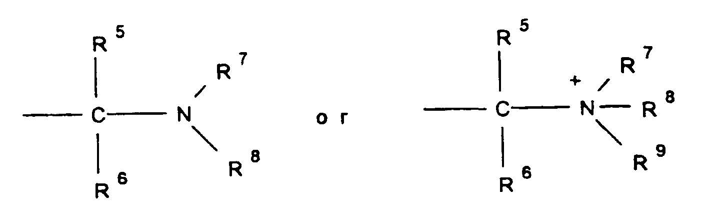 where each of R⁵ through R⁸ is selected, independently of each other and independently from one molecule of the component to another and from one to another unit of any polymer molecule conforming to this formula when there is more than one such unit in a single polymer molecule, from the group consisting of a hydrogen moiety, an alkyl moiety, an aryl moiety, a hydroxyalkyl moiety, an aminoalkyl moiety, a mercaptoalkyl moiety, and a phosphoalkyl moiety and R⁹ is selected from the group consisting of a hydrogen moiety, an alkyl moiety, an aryl moiety, a hydroxy or polyhydroxy alkyl moiety, an amino or polyamino alkyl moiety, a mercapto or polymercapto alkyl moiety, a phospho or polyphospho alkyl moiety, an -O- moiety, and an -OH moiety,
   at least one of Y¹ through Y⁴ in at least one unit of each selected polymer molecule being a moiety Z as above defined; and
   - W¹ is selected, independently from one molecule of the component to another and from one to another unit of any polymer molecule conforming to this formula when there is more than one such unit in a single polymer molecule, from the group consisting of a hydrogen moiety, an acyl moiety, an acetyl moiety, a benzoyl moiety; a 3-allyloxy-2-hydroxypropyl moiety; a 3-benzyloxy-2-hydroxypropyl moiety; a 3-butoxy-2-hydroxypropyl moiety; a 3-alkyloxy-2-hydroxypropyl moiety; a 2-hydroxyoctyl moiety; a 2-hydroxyalkyl moiety; a 2-hydroxy-2-phenylethyl moiety; a 2-hydroxy-2-alkylphenylethyl moiety; a benzyl, methyl, ethyl, propyl, unsubstituted alkyl, unsubstituted allyl, or unsubstituted alkylbenzyl moiety; a halo or polyhalo alkyl, or halo or polyhalo alkenyl, moiety; a moiety derived from a condensation polymerization product of ethylene oxide, propylene oxide or a mixture thereof by deleting one hydrogen atom therefrom; and a sodium, potassium, lithium, ammonium or substituted ammonium, or phosphonium or substituted phosphonium cation moiety; and
(β) consists of polymer molecules each of which does not include a unit conforming to general formula (II) as given above but does include at least one unit corresponding to the immediately following general formula (III): 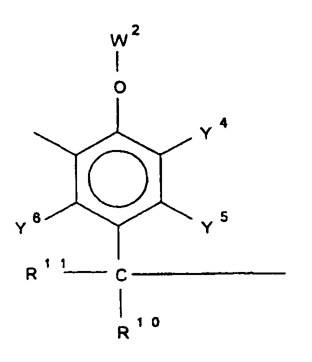 wherein:
   - each of R¹⁰ and R¹¹ is selected, independently of each other and independently from one molecule of the component to another and from one to another unit conforming to this formula when there is more than one such unit in a single polymer molecule, from the group consisting of a hydrogen moiety, an alkyl moiety with from 1 to 5 carbon atoms, and an aryl moiety with from 6 to 18 carbon atoms;
   - each of Y⁴ through Y⁶ is selected, independently, except as noted further below, of each other and independently from one molecule of the component to another and from one to another unit of any polymer molecule conforming to this formula when there is more than one such unit in a single polymer molecule from the group consisting of: a hydrogen moiety; a -CH₂Cl moiety; an alkyl moiety with from 1 to 18 carbon atoms; an aryl moiety with from 6 to 18 carbon atoms; a moiety conforming to the general formula -CR¹²R¹³OR¹⁴, where each of R¹² through R¹⁴ is selected from the group consisting of a hydrogen moiety, an alkyl moiety, an aryl moiety, a hydroxyalkyl moiety, an aminoalkyl moiety, a mercaptoalkyl moiety, and a phosphoalkyl moiety: and a moiety Z as defined for material (α) above, at least one of Y¹ through Y⁴ in at least one unit of each selected polymer molecule being a moiety Z as above defined; and
   - W² is selected, independently from one molecule of the component to another and from one to another unit conforming to this formula when there is more than one such unit in a single polymer molecule, from the group consisting of a hydrogen atom moiety, an acyl moiety, an acetyl moiety, a benzoyl moiety; a 3-allyloxy-2-hydroxypropyl moiety; a 3-benzyloxy-2-hydroxypropyl moiety; a 3-butoxy-2-hydroxypropyl moiety; a 3-alkyloxy-2-hydroxypropyl moiety; a 2-hydroxyoctyl moiety; a 2-hydroxyalkyl moiety; a 2-hydroxy-2-phenylethyl moiety; a 2-hydroxy-2-alkyl-phenylethyl moiety; a benzyl, methyl, ethyl, propyl, unsubstituted alkyl, unsubstituted allyl, or unsubstituted alkylbenzyl moiety; a halo or polyhalo alkyl, or halo or polyhalo alkenyl, moiety; a moiety derived from a condensation polymerization product of ethylene oxide, propylene oxide or a mixture thereof by deleting one hydrogen atom therefrom; and a sodium, potassium, lithium, ammonium or substituted ammonium, or phosphonium or substituted phosphonium cation moiety;
the phrase "polymer molecule" in the above definitions of materials (α) and (β) including any electrically neutral molecule with a molecular weight of at least 300 daltons.

It will be appreciated by those skilled in the art that general formulas (II) and (III) above represent repeating moieties that characterize the compound or materials of component (C) of a composition according to the present invention; no terminating end moieties are depicted. The end moieties of the molecules conforming to one of general formulas (II) or (III) can be selected by the skilled artisan relying upon art-disclosed techniques. For example, the end groups may result from a specific polymerization process employed or from intentional addition to alter the molecule's characteristics. Thus, the end groups may be hydrogen, hydroxyl, initiation fragments, chain transfer agents, disproportionation groups, or groups resulting from other methods of terminating a growing polymer chain. For economy at least, the end groups preferably are hydrogen or hydroxyl.

Ordinarily, primarily for reasons of economy, it is preferred to utilize as materials (α) and/or (β) predominantly molecules which consist entirely, except for relatively short end groups, of units conforming to one of the general formulas (II) and (III) as described above. Again primarily for reasons of economy, such materials are generally prepared by reacting homopolymers of p-vinyl phenol, for material (α), or phenol-aldehyde condensation products, for material (β), with formaldehyde and secondary amines to graft moieties Z on some of the activated benzene rings in the materials thus reacted.

However, in some particular instances, it may be more useful to utilize more chemically complex types of materials (α) and/or (β). For example, molecules formed by reacting a condensable form of a molecule belonging to component (α) or (β) as defined above, except that the molecule reacted need not initially satisfy the requirement for component (α) or (β) that each molecule contain at least one moiety Z, with at least one other distinct type of molecule which is selected from the group consisting of phenols, tannins, novolak resins, lignin compounds, aldehydes, ketones, and mixtures thereof, in order to prepare a condensation reaction product, which optionally if needed is then further reacted with (1) an aldehyde or ketone and (2) a secondary amine to introduce at least one moiety Z as above defined to each molecule, so that the molecule can qualify as material (α) or (β).

Another example of more complex materials that can be utilized as material (α) is material in which the polymer chains are at least predominantly copolymers of simple or substituted 4-vinyl phenol with another vinyl monomer such as acrylonitrile, methacrylonitrile, methyl acrylate, methyl methacrylate, vinyl acetate, vinyl methyl ketone, isopropenyl methyl ketone, acrylic acid, methacrylic acid, acrylamide, methacrylamide, n-amyl methacrylate, styrene, m-bromostyrene, p-bromostyrene, pyridine, diallyldimethylammonium salts, 1,3-butadiene, n-butyl acrylate, t-butylamino-ethyl methacrylate, n-butyl methacrylate, t-butyl methacrylate, n-butyl vinyl ether, t-butyl vinyl ether, m-chlorostyrene, o-chlorostyrene, p-chlorostyrene, n-decyl methacrylate, N,N-diallylmelamine, N,N-di-n-butylacrylamide, di-n-butyl itaconate, di-n-butyl maleate, diethylaminoethyl methacrylate, diethylene glycol monovinyl ether, diethyl fumarate, diethyl itaconate, diethylvinyl phosphate, vinylphosphonic acid, diisobutyl maleate, diisopropyl itaconate, diisopropyl maleate, dimethyl fumarate, dimethyl itaconate, dimethyl maleate, di-n-nonyl fumarate, di-n-nonyl maleate, dioctyl fumarate, di-n-octyl itaconate, di-n-propyl itaconate, N-dodecyl vinyl ether, acidic ethyl fumarate, acidic ethyl maleate, ethyl acrylate, ethyl cinnamate, N-ethyl methacrylamide, ethyl methacrylate, ethyl vinyl ether, 5-ethyl-2-vinylpyridine, 5-ethyl-2-vinylpyridine-1-oxide, glycidyl acrylate, glycidyl methacrylate, n-hexyl methacrylate, 2-hydroxyethyl methacrylate, 2-hydroxypropyl methacrylate, isobutyl methacrylate, isobutyl vinyl ether, isoprene, isopropyl methacrylate, isopropyl vinyl ether, itaconic acid, lauryl methacrylate, methacrylamide, methacrylic acid, methacry!onitrile, N-methylolacrylamide, N-methylol-methacrylamide, N-isobutoxymethylacrylamide, N-isobutoxy-methylmethacrylamide, N-alkyloxymethylacrylamide, N-alkyl-oxymethylmethacrylamide, N-vinylcaprolactam, methyl acrylate, N-methylmethacrylamide, α-methylstyrene, m-methylstyrene, o-methylstyrene, p-methylstyrene, 2-methyl-5-vinylpyridine, n-propyl methacrylate, sodium p-styrenesulfonate, stearyl methacrylate, styrene, p-styrenesulfonic acid, p-styrenesulfonamide, vinyl bromide, 9-vinyl carbazole, vinyl chloride, vinylidene chloride, 1-vinyl naphthalene, 2-vinyl naphthalene, 2-vinylpyridine, 4-vinylpyridine, 2-vinylpyridine N-oxide, 4-vinyl pyrimidine, and N-vinylpyrrolidone.

The following preferences, primarily for reasons of economy, improved corrosion resistance, and/or increased water solubility, apply, independently for each preference, to the molecules of materials (α) and (β):
- each of R² through R⁶, R¹⁰, R¹¹, W¹, and W², independently for each and from one unit to another in the same or a different molecule, preferably is a hydrogen atom moiety;
- each of Y¹ through Y⁶, independently for each and from one unit to another in the same or a different molecule, preferably is a hydrogen atom moiety or a moiety Z;
- averaged over the entire content of component (C), each polymer molecule contains a number of units corresponding to one of general formulas (II) and (III) as defined above that is at least, with increasing preference in the order given, 2, 3, 4, 5, 6, 7, or 8 and independently preferably is not more than 100. 75, 50, 40, 30, or 20;
- in the total of materials (α) and (β) in a composition used in step (II) according to the invention, the number of moieties Z has a ratio to the number of aromatic nuclei that is at least, with increasing preference in the order given, 0.01:1.0. 0.03:1.0, 0.05:1.0, 0.10:1.0, 0.20:1.0, 0.40:1.0, 0.50:1.0, 0.60:1.0, 0.70:1.0, 0.80:1.0, 0.90:1.0, or 0.95:1.0 and independently preferably is not more than, with increasing preference in the order given, 2.0:1.0, 1.6:1.0, 1.50:1.0, 1.40:1.0, 1.30:1.0, 1.20:1.0, 1.10:1.0, or 1.00:1.0;
- in the total of materials (α) and (β) in a composition used in step (II) according to the invention, the number of "polyhydroxy" moieties Z, in which at least R⁸ in the general formulas given above for moieties Z has (i) from 3 to 8, or preferably from 4 to 6, carbon atoms and (ii) as many hydroxyl groups, each attached to a distinct one of the carbon atoms, as one less than the number of carbon atoms in the R⁸ moiety, has a ratio to the total number of moieties Z in the composition that is at least, with increasing preference in the order given, 0.10:1.0, 0.20:1.0, 0.30:1.0, 0.40:1.0, 0.50:1.0, 0.60:1.0. 0.70:1.0, 0.80:1.0. 0.90:1.0, or 0.98:1.0 (preparation of such materials is described in the U.S. Patents cited above); and
- R⁷ is an alkyl moiety having not more than, with increasing preference in the order given, 5, 4, 3, 2, or 1 carbon atom.

Furthermore, and independently of the other preferences, at least for reasons of economy, material of type (α) is preferred over material of type (β).

Poly(5-vinyl-2-hydroxy-N-benzyl)-N-methylglucamine is a specific polymer of the most preferred type, which, in the acidic pH range which is preferred to be established, is believed to be present in an aqueous liquid composition according to this invention at least in part as an ammonium salt.

Irrespective of its exact chemical nature, component (C) is preferably present in an aqueous liquid composition according to this invention in a concentration that has a ratio to the stoichiometrically equivalent concentration as H₃PO₄ of component (A) in the same aqueous liquid composition that is at least, with increasing preference in the order given, 0.02:1.0, 0.04:1.0, 0.06:1.0, 0.08:1.0, 0.10:1.0, 0.12:1.0, 0.14:1.0, 0.16:1.0, 0.18:1.0, or 0.20:1.0 and independently preferably is not more than, with increasing preference in the order given, 2.0:1.0, 1.3:1.0, 1.0:1.0, 0.67:1.0, 0.53:1.0, 0.40:1.0, 0.35:1.0, 0.30:1.0, 0.26:1.0, 0.23:1.0, or 0.21:1.0.

Primarily for reasons of economy and/or convenience, component (D) as defined above is preferably selected from the large group of commercially available polymer latex dispersions in water and/or solutions in water with dispersed phases that meet the criteria specified above for component (D). Synthetic polymers of vinyl esters, styrene, and vinyl and vinylidene chlorides and natural, synthetically modified natural, or completely synthetic pofysaccharide polymers are suitable, and polymers of acrylic and methacrylic acids and of esters, nitriles, and amides of those two unsaturated acids are preferred. Particularly preferred are polymers of the type known in the art as "self-crosslinking", which contain comonomers capable of chemical reaction during or after drying of the latex in which they are dispersed so as to form chemical crosslinks between the largely linear polymer backbone chains that were present in the dispersed phase of the latex. Further and independently of the other preferences, the constituents of component (D) preferably have a glass transition temperature that is at least, with increasing preference in the order given, -10, 0, +5, +10, +15, +20, +25, or +30 °C and independently preferably is not more than, with increasing preference in the order given, 75, 65, 55, 45, or 40 °C.

Irrespective of its exact chemical nature, component (D), on a dried, non-volatile solids basis, preferably is present in an aqueous liquid composition according to this invention in a concentration that has a ratio to the stoichiometrically equivalent concentration as H₃PO₄ of component (A) in the same aqueous liquid composition that is at least, with increasing preference in the order given, 0.3:1.0, 0.5:1.0, 0.7:1.0, 0.9:1.0, 1.1:1.0, 1.3:1.0, 1.5:1.0, 1.7:1.0, 1.9:1.0, or 2.1:1.0 and independently preferably is not more than, with increasing preference in the order given, 15:1.0, 10:1.0, 8.0:1.0, 7.0:1.0, 6.0:1.0, 5.5:1.0, 5.0:1.0, 4.5:1.0, 4.0:1.0, 3.7:1.0, 3.4:1.0, 3.1:1.0, 2.9:1.0, 2.7:1.0, 2.5:1.0, or 2.3:1.0.

Component (E) in preferred amounts reduces the coefficient of friction of a coating formed by treatment according to this invention. Addition of component (E) also appears to improve corrosion resistance in some but not all compositions otherwise according to the invention.

Although inorganic materials such as molybdenum disulfide and graphite are suitable for component (E) of an aqueous liquid composition according to this invention, primarily for reasons of economy and dispersion stability, component (E) is preferably selected from organic materials, particularly solid paraffins, synthetic polyethylene and/or polypropylene polymers (optionally partially or fully halogenated, especially fluorinated), and other natural or synthetic waxes, that have a specific gravity not more than, with increasing preference in the order given, 2.2, 2.0, 1.8, 1.6, 1.4, 1.2, or 1.0 and the requisite low coefficient of static friction to be part of component (E). Even more preferably, the materials for component (E) have a coefficient of static friction that is not more than, with increasing preference in the order given, 0.30, 0.28, 0.26, 0.24, 0.22, 0.20, 0.18, 0.16, 0.14, or 0.10. Such materials are available commercially in pre-dispersed form, and a material of this type that is stable in acidic aqueous solution is preferred; in order to achieve such stability, a cationic dispersing agent for the constituent of component (E) is generally preferred; nonionic dispersing agents are next most preferred, and anionic dispersing agents least preferred, because most dispersions prepared with them are unstable in acidic compositions according to this invention. Dispersions of high-density polyethylene, paraffin wax, or montan wax are especially preferred, with the former two generally less expensive than the latter and preferred for that reason. If minimization of friction is more important than cost in some particular use, however, perfluroethylene polymers are most preferred.

Irrespective of its exact chemical nature, if component (E) has the specific gravity of high density polyethylene, the concentration, on a non-volatile solids basis, of component (E) in an aqueous liquid composition according to the invention when component (E) is used preferably is such as to have a ratio to the concentration of component (D), on a dried, non-volatile solids basis, in the same aqueous liquid composition according to this invention that is at least, with increasing preference in the order given, 0.005:1.0, 0.015:1.0, 0.025:1.0, 0.035:1.0, 0.042:1.0, 0.046:1.0, 0.050:1.0, 0.052:1.0, 0.054:1.0, 0.056:1.0, or 0.058:1.0 and independently preferably is not more than, with increasing preference in the order given, 0.40:1.0, 0.25:1.0, 0.15:1.0, 0.10:1.0, 0.075:1.0, 0.068:1.0, 0.062:1.0, or 0.060:1.0. If the specific gravity of the component is different from that of high density polyethylene, the ratios given above should be adjusted so as to have the same {component (E) constituent volume} to {component (D) weight} ratio as do the above stated preferences for high density polyethylene.

Except for dispersing agent for component (E) and often also for component (D), the other optional components of an aqueous liquid composition according to the invention are not generally needed and therefore are preferably omitted. However, a surfactant may be needed to assure adequate wetting of some metal substrates and/or reduce foaming or may be advantageous to provide some cleaning along with the coating; a preservative may be needed if the composition is nourishing to micro-organisms in the environment where it is used; and a colorant may be useful in visually estimating the thickness of the coating applied or providing a decorative effect to the surface.

For a variety of reasons, it is sometimes preferred that compositions according to the invention as defined above should be substantially free from many ingredients used in compositions for similar purposes in the prior art. Specifically, when maximum storage stability of a concentrate, avoidance of possibly troublesome ions, and/or minimization of pollution potential is desired, it is preferred, with increasing preference in the order given, independently for each preferably minimized substance listed below, that these compositions contain no more than 25, 15, 9, 5, 3, 1.0, 0.35, 0.10, 0.08, 0.04, 0.02, 0.01, 0.001, or 0.0002, percent of each of the following constituents, except to the extent that these components may be part of a necessary or optional component of the composition as defined above: nitrite; halates and perhalates (i.e., perchlorate, chlorate, iodate, etc.); hydroxylamine and salts and complexes of hydroxylamine; chloride; bromide; iodide; organic compounds containing nitro groups; hexavalent chromium; ferricyanide; ferrocyanide; pyrazole compounds, and any dissolved ions of metals with an atomic number greater than 20. Components such as these may not be harmful in some instances, but they have not been found to be needed or advantageous in compositions according to this invention, and their minimization is therefore normally preferred at least for reasons of economy.

Treatment of a metal substrate in a process according to this invention preferably comprises forming a layer of an aqueous liquid working composition according to the invention as described above over the surface to be treated, and then drying into place, without any rinsing, or other disturbance, of the layer thus formed. For this reason, the concentrations of the necessary components (A) through (D) as described above in a working composition according to the invention are usually not at all critical. A thick layer of a working composition with low concentrations will contain the same ultimate constituents according to the invention as a thin layer of a more concentrated working composition. However, it has been found that at least a moderately acidic pH is needed for a working composition according to the invention, presumably, although the invention is not to be considered limited by this or any other theory, because some acidity is needed to dissolve at least some metal ions from the surface being treating to be incorporated into the coating. More particularly, the pH value of a working composition according to the invention preferably is at least, with increasing preference in the order given, -0.5, 0.0, 0.5, 1.0, 1.2, 1.4, 1.6, 1.8, or 2.0 and independently preferably is not more than, with increasing preference in the order given, 6.0, 5.0, 4.0, 3.8, 3.6, 3.4, 3.2, 3.0, 2.8, 2.6, 2.4, or 2.2.

The liquid layer of a working composition according to the invention formed in a process according to the invention preferably has a thickness such that the average increase in mass per unit area of metal substrate treated, measured after drying into place, is at least, with increasing preference in the order given, 0.20, 0.40, 0.60, 0.80, 1.0, 1.5, or 2.0 grams of mass increase per square meter of metal substrate surface treated, this unit being hereinafter usually abbreviated as "g/m²" and independently, primarily for reasons of economy, preferably is not more than, with increasing preference in the order given, 10, 8, 6, 5.0, 4.0, 3.5, 3.0, 2.5, or 2.2 g/m². As a very general guideline, because of the practicalities of controlling liquid film coating thicknesses, the total content of components (A) through (E) of a working composition according to the invention preferably is at least, with increasing preference in the order given, 1, 3, 5, 7, 9, or 11 % and independently preferably is not more than, with increasing preference in the order given, 50, 45, 40, 35, 30, 25, 20, or 15 %.

Forming a liquid film on a metal substrate surface to be treated in a process according to the invention may be accomplished by any of numerous methods known to those skilled in the art, such as direct or transfer roll coating, curtain coating, immersion in and then removal from a volume of a working composition according to the invention held within a container, and spraying and then discontinuance of spraying, in all instances with the further option of removing some of the initially adherent liquid layer by use of a flow of compressed gas such as air or of a squeegee or other mechanical device, in order to dry into place a preferred amount of non-volatiles content of the aqueous liquid working composition. Drying can be accomplished by simple exposure to ambient air for a sufficient time, particularly if the treated surface has been formed at a sufficiently high temperature that drying occurs within a few seconds of separation from contact with the working aqueous liquid composition according to the invention as described above. Alternatively and usually preferably, one may hasten the drying by exposure of the wet surface after treatment to a higher temperature than the normal ambient temperature, in an oven or by any of the other means such as infrared radiant heating, microwave drying, and the like well known *per se* in the art. Preferably the peak metal temperature during this drying process does not exceed 150, 125, 100, 90, 80, 75, 70, or 66 °C. The peak metal temperature may conveniently be controlled by a sensor strip attached to part of the substrate during drying. The sensor strip determines an upper limit on peak temperature by irreversible changes in temperature calibrated zones of the sensor strip. The peak temperature may also be measured directly during the drying process by other means known to those skilled in the art, e.g., an infrared photometer.

Preferably, the temperature of the working aqueous liquid composition during a process according to the invention is at least, with increasing preference in the order given, 15, 17, 19, 21, 23, or 25 °C and independently preferably, primarily for reasons of economy, is not more than 60, 50, 45, 40, 35, or 30 °C. The quality of the coating layer formed is not known to be substantially affected by the temperature during treatment if the temperature is within any of these preferred limits

The time during which physical contact is maintained between the metal surface to be treated and a working aqueous liquid composition according to the invention preferably, for reasons of economy of operation, is as short as possible, consistent with formation of a coating layer as effective as desired. More specifically, the time of contact preferably is not more than, with increasing preference in the order given, 200, 150, 100, 75, 50, 40, 30, 25, 20, 15, 13, 11, 10, 9.0, 8.0, 7.0, 6.0, 5.0, 4.0, 3.0, 2.0, 1.5, or 1.0 seconds.

Before treatment according to this invention is to be used for any metal substrate, the substrate is preferably thoroughly cleaned by any of various methods well known to those skilled in the art to be suitable for the particular substrate to be treated.

As with many other types of metal surface treatment compositions, with those according to this invention it is economically advantageous to supply their active ingredients to ultimate users in one or more liquids that contain much higher concentrations of the active ingredients than are normally used in working compositions. In this particular instance, it has been found that the most concentrated make-up concentrates that can practically be prepared do not consistently have the degree of storage stability desired if they contain all of components (A) through (E) of preferred compositions according to the invention as described above. However, components (A) through (C) may be present in a primary make-up concentrate with good storage stability. Such a concentrate preferably contains, independently for each component given: an amount of component (A) that corresponds stoichiometrically to an amount of H₃PO₄ that constitutes at least, with increasing preference in the order given, 20, 24, 28, 31, or 34 % of the total primary make-up concentrate; at least, with increasing preference in the order given, 0.50, 0.60, 0.70, 0.80, 0.90, 0.95, 1.00, or 1.05 moles of one or more metal atoms or boron atoms associated with fluorine atoms in an anion per kilogram of the total primary make-up concentrate; and at least, with increasing preference in the order given, 4.0, 4.5, 5.0, 5.5, 6.0, 6.5, or 7.0 percent of component (C). In addition, the preferences that are given above for ratios between components (B) and (A) and between component (C) and component (A) in working compositions also apply to these primary make-up concentrates, because they preferably contain all of components (A) through (C) that are contained in the working compositions in which these primary make-up concentrates are used as ingredients.

A working composition for use according to the invention preferably is prepared from a preferred primary make-up concentrate as described above by first diluting a concentrated source, usually a commercially supplied latex, of the intended amount of component (D) in the working composition with deionized water to about half of the intended final volume of the working composition. Next, with stirring or other agitation, add the proper amount of preferred primary make-up concentrate to introduce the intended amounts of components (A) through (C) to the working composition. Continue mixing until the appearance of the mixture is uniform. Then add from a concentrated source the amount of component (E) intended for the final working composition and any additional volume of deionized water needed to complete the intended working composition mass or volume, and mix the ingredients together for at least 15 minutes after the last addition, utilizing a mixing method that minimizes foam generation.

The practice of this invention may be further appreciated by consideration of the following, non-limiting examples, and the benefits of the invention may be appreciated by contrast with the comparison examples set forth below and additional comparisons known to those skilled in the art.

### WORKING COMPOSITIONS AND PROCESSES ― GROUP1

These compositions are shown in Table 1 below. Each composition was coated on duplicate hot-dipped-galvanized flat test panels at normal ambient human comfort temperature (i.e., 18 - 23°C), using a drawbar to put into place an aqueous liquid composition with a substantially uniform thickness, which was then dried into place in a convection oven maintained at about 120°C, but was kept in this oven for a short enough time that the peak metal temperature did not exceed 66 °C. After completion of this treatment, the coated panels were subjected to bare salt-spray testing according to American Society for Testing and Materials Procedure B117-90. Coating add-on masses per unit area and the salt spray test results are shown in Table 2, in which results for duplicate panels under the same preparation and testing conditions are shown in side-by-side columns.

**Table 1**

| | **Parts by Mass in Working composition of:** | | | | | | | | |
|---|---|---|---|---|---|---|---|---|---|
| **Composition Number** | **Deionized Water** | **75% H**_{**3**}**PO**_{**4**} | **Component (B)** | | **Component (C)** | **Component (D)** | **Component (E)** | | |
| | | | **60 % H**_{**2**}**TiF**_{**6**} | **20 % H**_{**2**}**ZrF**_{**6**} | | | **ChemCor KSL30N** | **Aqua- slip 671** | **ChemCor 392C30** |
| 1.1.0 | 7.05 | 0.10 | 0.10 | | 0.25 | 2.5 | | | |
| 1.1.1 | 7.05 | 0.10 | 0.10 | | 0.25 | 2.5 | 0.50 | | |
| 1.1.2 | 7.05 | 0.10 | 0.10 | | 0.25 | 2.5 | | 0.38 | |
| 1.1.3 | 7.05 | 0.10 | 0.10 | | 0.25 | 2.5 | | | 0.50 |
| 1.2.0 | 6.85 | 0.10 | 0.30 | | 0.25 | 2.5 | | | |
| 1.2.1 | 6.85 | 0.10 | 0.30 | | 0.25 | 2.5 | 0.50 | | |
| 1.2.2 | 6.85 | 0.10 | 0.30 | | 0.25 | 2.5 | | 0.38 | |
| 1.2.3 | 6.85 | 0.10 | 0.30 | | 0.25 | 2.5 | | | 0.50 |
| 1.3.0 | 6.65 | 0.50 | 0.10 | | 0.25 | 2.5 | | | |
| 1.3.1 | 6.65 | 0.50 | 0.10 | | 0.25 | 2.5 | 0.50 | | |
| 1.3.2 | 6.65 | 0.50 | 0.10 | | 0.25 | 2.5 | | 0.38 | |
| 1.3.3 | 6.65 | 0.50 | 0.10 | | 0.25 | 2.5 | | | 0.050 |
| 1.4.0 | 6.45 | 0.50 | 0.30 | | 0.25 | 2.5 | | | |
| 1.4.1 | 6.45 | 0.50 | 0.30 | | 0.25 | 2.5 | 0.50 | | |
| 1.4.2 | 6.45 | 0.50 | 0.30 | | 0.25 | 2.5 | | 0.38 | |
| 1.4.3 | 6.45 | 0.50 | 0.30 | | 0.25 | 2.5 | | | 0.50 |
| 1.5.0 | 6.80 | 0.10 | 0.10 | | 0.50 | 2.5 | | | |
| 1.5.1 | 6.80 | 0.10 | 0.10 | | 0.50 | 2.5 | 0.50 | | |
| 1.5.2 | 6.80 | 0.10 | 0.10 | | 0.50 | 2.5 | | 0.38 | |
| 1.5.3 | 6.80 | 0.10 | 0.10 | | 0.50 | 2.5 | | | 0.50 |
| 1.6.0 | 6.60 | 0.10 | 0.30 | | 0.50 | 2.5 | | | |
| 1.6.1 | 6.60 | 0.10 | 0.30 | | 0.50 | 2.5 | 0.50 | | |
| 1.6.2 | 6.60 | 0.10 | 0.30 | | 0.50 | 2.5 | | 0.38 | |
| 1.6.3 | 6.60 | 0.10 | 0.30 | | 0.50 | 2.5 | | | 0.50 |
| 1.7.0 | 6.40 | 0.50 | 0.10 | | 0.50 | 2.5 | | | |
| 1.7.1 | 6.40 | 0.50 | 0.10 | | 0.50 | 2.5 | 0.50 | | |
| 1.7.2 | 6.40 | 0.50 | 0.10 | | 0.50 | 2.5 | | 0.38 | |
| 1.7.3 | 6.40 | 0.50 | 0.10 | | 0.50 | 2.5 | | | 0.50 |
| 1.8.0 | 6.20 | 0.50 | 0.30 | | 0.50 | 2.5 | | | |
| 1.8.1 | 6.20 | 0.50 | 0.30 | | 0.50 | 2.5 | 0.50 | | |
| 1.8.2 | 6.20 | 0.50 | 0.30 | | 0.50 | 2.5 | | 0.38 | |
| 1.8.3 | 6.20 | 0.50 | 0.30 | | 0.50 | 2.5 | | | 0.50 |
| 1.9.0 | 6.30 | 0.10 | 0.10 | | 1.00 | 2.5 | | | |
| 1.9.1 | 6.30 | 0.10 | 0.10 | | 1.00 | 2.5 | 0.50 | | |
| 1.9.2 | 6:30 | 0.10 | 0.10 | | 1.00 | 2.5 | | 0.38 | |
| 1.9.3 | 6.30 | 0.10 | 0.10 | | 1.00 | 2.5 | | | 0.50 |
| 1.10.0 | 6.10 | 0.10 | 0.30 | | 1.00 | 2.5 | | | |
| 1.10.1 | 6.10 | 0.10 | 0.30 | | 1.00 | 2.5 | 0.50 | | |
| 1.10.2 | 6.10 | 0.10 | 0.30 | | 1.00 | 2.5 | | 0.38 | |
| 1.10.3 | 6.10 | 0.10 | 0.30 | | 1.00 | 2.5 | | | 0.50 |
| 1.11.0 | 5.90 | 0.50 | 0.10 | | 1.00 | 2.5 | | | |
| 1.11.1 | 5.90 | 0.50 | 0.10 | | 1.00 | 2.5 | 0.50 | | |
| 1.11.2 | 5.90 | 0.50 | 0.10 | | 1.00 | 2.5 | | 0.38 | |
| 1.11.3 | 5.90 | 0.50 | 0.10 | | 1.00 | 2.5 | | | 0.50 |
| 1.12.0 | 5.70 | 0.50 | 0.30 | | 1.00 | 2.5 | | | |
| 1.12.1 | 5.70 | 0.50 | 0.30 | | 1.00 | 2.5 | 0.50 | | |
| 1.12.2 | 5.70 | 0.50 | 0.30 | | 1.00 | 2.5 | | 0.38 | |
| 1.12.3 | 5.70 | 0.50 | 0.30 | | 1.00 | 2.5 | | | 0.50 |
| 1.13.0 | 6.65 | 0.10 | | 0.50 | 0.25 | 2.5 | | | |
| 1.13.1 | 6.65 | 0.10 | | 0.50 | 0.25 | 2.5 | 0.50 | | |
| 1.13.2 | 6.65 | 0.10 | | 0.50 | 0.25 | 2.5 | | 0.38 | |
| 1.13.3 | 6.65 | 0.10 | | 0.50 | 0.25 | 2.5 | | | 0.50 |
| 1.14.0 | 6.15 | 0.10 | | 1.00 | 0.25 | 2.5 | | | |
| 1.14.1 | 6.15 | 0.10 | | 1.00 | 0.25 | 2.5 | 0.50 | | |
| 1.14.2 | 6.15 | 0.10 | | 1.00 | 0.25 | 2.5 | | 0.38 | |
| 1.14.3 | 6.15 | 0.10 | | 1.00 | 0.25 | 2.5 | | | 0.50 |
| 1.15.0 | 6.25 | 0.50 | | 0.50 | 0.25 | 2.5 | | | |
| 1.15.1 | 6.25 | 0.50 | | 0.50 | 0.25 | 2.5 | 0.50 | | |
| 1.15.2 | 6.25 | 0.50 | | 0.50 | 0.25 | 2.5 | | 0.38 | |
| 1.15.3 | 6.25 | 0.50 | | 0.50 | 0.25 | 2.5 | | | 0.50 |
| 1.16.0 | 5.75 | 0.50 | | 1.00 | 0.25 | 2.5 | | | |
| 1.16.1 | 5.75 | 0.50 | | 1.00 | 0.25 | 2.5 | 0.50 | | |
| 1.16.2 | 5.75 | 0.50 | | 1.00 | 0.25 | 2.5 | | 0.38 | |
| 1.16.3 | 5.75 | 0.50 | | 1.00 | 0.25 | 2.5 | | | 0.50 |
| 1.17.0 | 6.40 | 0.10 | | 0.50 | 0.50 | 2.5 | | | |
| 1.17.1 | 6.40 | 0.10 | | 0.50 | 0.50 | 2.5 | 0.50 | | |
| 1.17.2 | 6.40 | 0.10 | | 0.50 | 0.50 | 2.5 | | 0.38 | |
| 1.17.3 | 6.40 | 0.10 | | 0.50 | 0.50 | 2.5 | | | 0.50 |
| 1.18.0 | 5.90 | 0.10 | | 1.00 | 0.50 | 2.5 | | | |
| 1.18.1 | 5.90 | 0.10 | | 1.00 | 0.50 | 2.5 | 0.50 | | |
| 1.18.2 | 5.90 | 0.10 | | 1.00 | 0.50 | 2.5 | | 0.38 | |
| 1.18.3 | 5.90 | 0.10 | | 1.00 | 0.50 | 2.5 | | | 0.50 |
| 1.19.0 | 6.00 | 0.50 | | 0.50 | 0.50 | 2.5 | | | |
| 1.19.1 | 6.00 | 0.50 | | 0.50 | 0.50 | 2.5 | 0.50 | | |
| 1.19.2 | 6.00 | 0.50 | | 0.50 | 0.50 | 2.5 | | 0.38 | |
| 1.19.3 | 6.00 | 0.50 | | 0.50 | 0.50 | 2.5 | | | 0.50 |
| 1.20.0 | 5.50 | 0.50 | | 1.00 | 0.50 | 2.5 | | | |
| 1.20.1 | 5.50 | 0.50 | | 1.00 | 0.50 | 2.5 | 0.50 | | |
| 1.20.2 | 5.50 | 0.50 | | 1.00 | 0.50 | 2.5 | | 0.38 | |
| 1.20.3 | 5.50 | 0.50 | | 1.00 | 0.50 | 2.5 | | | 0.50 |
| 1.21.0 | 5.90 | 0.10 | | 0.50 | 1.00 | 2.5 | | | |
| 1.21.1 | 5.90 | 0.10 | | 0.50 | 1.00 | 2.5 | 0.50 | | |
| 1.21.2 | 5.90 | 0.10 | | 0.50 | 1.00 | 2.5 | | 0.38 | |
| 1.21.3 | 5.90 | 0.10 | | 0.50 | 1.00 | 2.5 | | | 0.50 |
| 1.22.0 | 5.40 | 0.10 | | 0.50 | 1.00 | 2.5 | | | |
| 1.22.1 | 5.40 | 0.10 | | 0.50 | 1.00 | 2.5 | 0.50 | | |
| 1.22.2 | 5.40 | 0.10 | | 0.50 | 1.00 | 2.5 | | 0.38 | |
| 1.22.3 | 5.40 | 0.10 | | 0.50 | 1.00 | 2.5 | | | 0.50 |
| 1.23.0 | 5.50 | 0.50 | | 0.50 | 1.00 | 2.5 | | | |
| 1.23.1 | 5.50 | 0.50 | | 0.50 | 1.00 | 2.5 | 0.50 | | |
| 1.23.2 | 5.50 | 0.50 | | 0.50 | 1.00 | 2.5 | | 0.38 | |
| 1.23.3 | 5.50 | 0.50 | | 0.50 | 1.00 | 2.5 | | | 0.50 |
| 1.24.0 | 5.00 | 0.50 | | 1.00 | 1.00 | 2.5 | | | |
| 1.24.1 | 5.00 | 0.50 | | 1.00 | 1.00 | 2.5 | 0.50 | | |
| 1.24.2 | 5.00 | 0.50 | | 1.00 | 1.00 | 2.5 | | 0.38 | |
| 1.24.3 | 5.00 | 0.50 | | 1.00 | 1.00 | 2.5 | | | 0.50 |
| Notes for Table 1 In a column heading in which a percentage value for an active ingredient appears, the remainder of the mass for that ingredient was water. A blank table cell in a column indicates that none of the ingredient specified at the top of that column was added to the working composition specified in the row. | | | | | | | | | |
| Component (C) for this Table was a 30 % non-volatiles by weight solution/dispersion in water of a polymer made substantially as taught in lines 47 - 59 of column I 1 of U. S. Patent 5,068,299 or of a polymer made substantially as taught in lines 1 - 18 of column 10 of U. S. Patent 5,116,912. The actual preparation of the polymers may alternatively be practiced as taught in a U. S. application of David R. McCormick, Andreas Lindert, and John R. Pierce filed on October 1, 1997 and titled AQUEOUS COMPOSITIONS CONTAINING POLYPHENOL COPOLYMERS AND PROCESSES FOR THEIR PREPARATION, the entire disclosure of which, except for any part that may be inconsistent with any explicit statement herein, is hereby incorporated herein by reference. | | | | | | | | | |
| Component (D) for this Table was one of the following commercially supplied latexes: Accumer™ 1510 latex from Zeneca, Inc., reported by its supplier to be a 40 % solids solution in water of a polyacrylic acid; Neocryl™ A 640 latex from Zeneca, Inc., reported by its supplier to be a 40 % solids dispersion/solution in water of a styrene-acrylic copolymer; or Rhoplex™ HA-16 or HA-12 latexes from Rohm & Haas Co, reported by their supplier to be 41 - 46 % solids dispersions of self-crosslinking acrylic acid copolymers. ChemCor KSL30N and 392C30 dispersions were obtained from ChemCor, Chester, New York and were reported by their supplier to be 29 - 31 % solids dispersions in water of montan ester wax, with a nonionic dispersing agent, and high density polyethylene, with a cationic dispersing agent, respectively. | | | | | | | | | |
| Aquaslip™ 671 dispersion was obtained from Lubrizol (U. S. distributor for Langer & Co. GmbH, Ritterhude, Germany) and was reported by its manufacturer to be a 40 % non-volatiles dispersion in water of polyethylene wax in water, with a pH value of 3.5 - 4.5 and a fine particle size. | | | | | | | | | |

**Table 2**

| **Composition Number** | **Coating Add-On Mass, g/m**^{**2**} | **Salt Spray Test Rating After:** | | **Composi- tion Number** | **Coating Add-On Mass, g/m** ^{**2**} | **Salt Spray Test Rating After:** | |
|---|---|---|---|---|---|---|---|
| | | **24 Hours** | **96 Hours** | | | **24 Hours** | **96 Hours** |
| 1.1.0 | 2.5 | < 1 | 2 | 1.1.0 | 2.5 | 2 | 1 0 |
| 1.1.1 | 2.7 | 2 | 30 | 1.1.1 | 2.7 | 1 | 2 |
| 1.1.2 | 2.3 | 2 | 10 | 1.1.2 | 2.3 | 1 | 5 |
| 1.1.3 | 1.9 | 5 | 15 | 1.1.3 | 1.9 | 20 | 75 |
| 1.2.0 | 2.2 | 2 | 5 | 1.2.0 | 2.2 | 1 | 10 |
| 1.2.1 | 2.5 | 2 | 20 | 1.2.1 | 2.5 | 5 | 15 |
| 1.2.2 | 2.4 | 1 | 25 | 1.2.2 | 2.4 | 5 | 25 |
| 1.2.3 | 1.9 | < 1 | 10 | 1.2.3 | 1.9 | 10 | 40 |
| 1.3.0 | 1.9 | 3 | 15 | 1.3.0 | 1.9 | 1 | 10 |
| 1.3.1 | 2.4 | N | 2 | 1.3.1 | 2.4 | N | 5 |
| 1.3.2 | 2.6 | 5 | 50 | 1.3.2 | 2.6 | 5 | 40 |
| 1.3.3 | 2.7 | 10 | 90 | 1.3.3 | 2.7 | 40 | 95 |
| 1.4.0 | 2.1 | N | < 1 | 1.4.0 | 2.1 | N | N |
| 1.4.1 | 2.1 | N | N | 1.4.1 | 2.1 | N | < 1 |
| 1.4.2 | 2.6 | N | 1 | 1.4.2 | 2.6 | N | 1 |
| 1.4.3 | 2.3 | < 1 | 5 | 1.4.3 | 2.3 | 2 | 10 |
| 1.5.0 | 2.3 | 1 | 20 | 1.5.0 | 2.3 | < 1 | 10 |
| 1.5.1 | 2.5 | <1 | 15 | 1.5.1 | 2.5 | N | 5 |
| 1.5.2 | 2.5 | 1 | 10 | 1.5.2 | 2.5 | 10 | 15 |
| 1.5.3 | 2.1 | 95 | 99 | 1.5.3 | 2.1 | 95 | 99 |
| 1.6.0 | 1.8 | 1 | 15 | 1.6.0 | 1.8 | < 1 | 2 |
| 1.6.1 | 2.5 | N | 5 | 1.6.1 | 2.5 | 1 | 15 |
| 1.6.2 | 2.4 | <1 | 10 | 1.6.2 | 2.4 | <1 | 10 |
| 1.6.3 | 2.4 | 75 | 75 | 1.6.3 | 2.4 | 80 | 90 |
| 1.7.0 | 2.4 | 20 | 25 | 1.7.0 | 2.4 | 5 | 10 |
| 1.7.1 | 2.4 | 1 | 5 | 1.7.1 | 2.4 | 2 | 20 |
| 1.7.2 | 2.9 | <1 | 10 | 1.7.2 | 2.9 | 10 | 40 |
| 1.7.3 | 2.2 | 95 | 99 | 1.7.3 | 2.2 | 75 | 99 |
| 1.8.0 | 2.5 | N | 1 | 1.8.0 | 2.5 | N | N |
| 1.8.1 | 2.4 | N | N | 1.8.1 | 2.4 | N | N |
| 1.8.2 | 3.1 | N | N | 1.8.2 | 3.1 | N | 1 |
| 1.8.3 | 2.3 | 1 | 5 | 1.8.3 | 2.3 | | 10 |
| 1.9.0 | 2.2 | 10 | 50 | 1.9.0 | 2.2 | 20 | 60 |
| 1.9.1 | 2.7 | 2 | 15 | 1.9.1 | 2.7 | 10 | 25 |
| 1.9.2 | 2.6 | 5 | 15 | 1.9.2 | 2.6 | 10 | 60 |
| 1.9.3 | 2.5 | 99 | 99 | 1.9.3 | 2.5 | 99 | 99 |
| 1.10.0 | 2.4 | 1 | 10 | 1.10.0 | 2.4 | 10 | 15 |
| 1.10.1 | 2.9 | < 1 | 15 | 1.10.1 | 2.9 | 5 | 20 |
| 1.10.2 | 2.6 | 10 | 15 | 1.10.2 | 2.6 | 5 | 20 |
| 1.10.3 | 2 | 95 | 95 | 1.10.3 | 2.0 | 95 | 99 |
| 1.11.0 | 2.2 | 90 | 90 | 1.11.0 | 2.2 | 90 | 90 |
| 1.11.1 | 2.4 | 5 | 25 | 1.11.1 | 2.4 | 75 | 99 |
| 1.11.2 | 2.6 | 10 | 15 | 1.11.2 | 2.6 | 75 | 80 |
| 1.11.3 | 2.4 | 80 | 99 | 1.11.3 | 2.4 | 60 | 99 |
| 1.12.0 | 2.7 | <1 | <1 | 1.12.0 | 2.7 | 5 | 5 |
| 1.12.1 | 2.7 | N | 1 | 1.12.1 | 2.7 | <1 | 1 |
| 1.12.2 | 3.3 | N | 1 | 1.12.2 | 3.3 | 1 | 1 |
| 1.12.3 | 2.1 | 2 | 30 | 1.12.3 | 2.1 | N | 10 |
| 1.13.0 | 3.4 | 10 | 40 | 1.13.0 | 3.4 | 5 | 40 |
| 1.13.1 | 2.3 | <1 | 5 | 1.13.1 | 2.3 | 1 | 5 |
| 1.13.2 | 2.6 | 25 | 45 | 1.13.2 | 2.6 | 30 | 50 |
| 1.13.3 | 2.1 | 95 | 99 | 1.13.3 | 2.1 | 99 | 99 |
| 1.14.0 | 1.9 | 50 | 90 | 1.14.0 | 1.9 | 40 | 95 |
| 1.14.1 | 2.5 | 15 | 60 | 1.14.1 | 2.5 | 50 | 75 |
| 1.14.2 | 2.1 | 25 | 70 | 1.14.2 | 2.1 | 30 | 70 |
| 1.14.3 | 2.4 | 95 | 95 | 1.14.3 | 2.4 | 95 | 95 |
| 1.15.0 | 2.4 | 60 | 95 | 1.15.0 | 2.4 | 90 | 99 |
| 1.15.1 | 2.6 | 25 | 80 | 1.15.1 | 2.6 | 50 | 90 |
| 1.15.2 | 2.7 | 25 | 60 | 1.15.2 | 2.7 | 60 | 90 |
| 1.15.3 | 2.2 | 99 | 99 | 1.15.3 | 2.2 | 90 | 99 |
| 1.16.0 | 2.5 | 10 | 20 | 1.16.0 | 2.5 | 10 | 40 |
| 1.16.1 | 2.5 | 1 | 5 | 1.16.1 | 2.5 | 40 | 99 |
| 1.16.2 | 2.5 | 30 | 40 | 1.16.2 | 2.5 | 40 | 99 |
| 1.16.3 | 1.9 | 99 | 99 | 1.16.3 | 1.9 | 99 | 99 |
| 1.17.0 | 2.2 | 5 | 20 | 1.17.0 | 2.2 | 2 | 20 |
| 1.17.1 | 2.6 | 2 | 2 | 1.17.1 | 2.6 | <1 | 10 |
| 1.17.2 | 2.5 | 10 | 30 | 1.17.2 | 2.5 | 20 | 30 |
| 1.17.3 | 2.4 | 99 | 99 | 1.17.3 | 2.4 | 99 | 99 |
| 1.18.0 | 2.6 | 40 | 80 | 1.18.0 | 2.6 | 60 | 90 |
| 1.18.1 | 2.7 | 2 | 5 | 1.18.1 | 2.7 | 2 | 30 |
| 1.18.2 | 2.4 | 10 | 30 | 1.18.2 | 2.4 | 20 | 40 |
| 1.18.3 | 2.1 | 99 | 99 | 1.18.3 | 2.1 | 99 | 99 |
| 1.19.0 | 2.6 | 20 | 70 | 1.19.0 | 2.6 | 80 | 90 |
| 1.19.1 | 2.7 | 2 | 20 | 1.19.1 | 2.7 | 10 | 80 |
| 1.19.2 | 3.0 | 20 | 70 | 1.19.2 | 3.0 | 30 | 70 |
| 1.19.3 | 2.1 | 95 | 99 | 1.19.3 | 2.1 | 40 | 99 |
| 1.20.0 | 2.5 | 50 | 80 | 1.20.0 | 2.5 | 90 | 90 |
| 1.20.1 | 2.5 | 1 | 5 | 1.20.1 | 2.5 | < 1 | 5 |
| 1.20.2 | 2.5 | 20 | 40 | 1.20.2 | 2.5 | 20 | 80 |
| 1.20.3 | 2.2 | 95 | 99 | 1.20.3 | 2.2 | 99 | 99 |
| 1.21.0 | 2.4 | 50 | 90 | 1.21.0 | 2.4 | 60 | 80 |
| 1.21.1 | 2.5 | 5 | 15 | 1.21.1 | 2.5 | 1 | 10 |
| 1.21.2 | 2.5 | 10 | 30 | 1.21.2 | 2.5 | 15 | 60 |
| 1.21.3 | 2.3 | 99 | 99 | 1.21.3 | 2.3 | 95 | 99 |
| 1.22.0 | 2.9 | 20 | 80 | 1.22.0 | 2.9 | 50 | 90 |
| 1.22.1 | 2.2 | 10 | 20 | 1.22.1 | 2.3 | 2 | 10 |
| 1.22.2 | 2.3 | 40 | 95 | 1.22.2 | 2.3 | 20 | 80 |
| 1.22.3 | 2.4 | 95 | 95 | 1.22.3 | 2.4 | 95 | 99 |
| 1.23.0 | 2.3 | 15 | 90 | 1.23.0 | 2.3 | 30 | 70 |
| 1.23.1 | 2.6 | 5 | 15 | 1.23.1 | 2.6 | 2 | 20 |
| 1.23.2 | 2.3 | 40 | 95 | 1.23.2 | 2.3 | 50 | 90 |
| 1.23.3 | 2.1 | 95 | 95 | 1.23.3 | 2.1 | 85 | 99 |
| 1.24.0 | 2.3 | 2 | 10 | 1.24.0 | 2.3 | 5 | 20 |
| 1.24:1 | 2.5 | 1 | 5 | 1.24.1 | 2.5 | N | 5 |
| 1.24.2 | 2.8 | 2 | 15 | 1.24.2 | 2.8 | 5 | 15 |
| 1.24.3 | 2.1 | 40 | 95 | 1.24.3 | 2.1 | 70 | 99 |
| Notes for Table 2 | | | | | | | |
| The numbers for the salt spray results are percentages of the surface visibly covered by white rust after the time of testing specified, and unless there is a specification to the contrary, indicates that no red rust was visible. "N" means no white or red rust was visible. | | | | | | | |

### EXAMPLE AND COMPARISON EXAMPLE GROUP 2

This group includes comparisons against prior art commercial products. The substrates were flat panels of Pittsburgh-Canfield "Polished" electrogalvanized steel. Before treatment with a composition according to the invention or a comparison composition, the panels were cleaned according to a PARCO® Cleaner 338 process commercially available from the Henkel Surface Technologies Div. of Henkel Corp., Madison Heights, Michigan (hereinafter usually abbreviated as "HST"), using 5 points concentration of the cleaner concentrate for 7 - 10 seconds of spraying on the panels at 49 °C, subsequent rinsing in hot water, and drying in air. The tested aqueous liquid compositions according to the invention are shown in Table 3. The ingredients identified by component letter only have the same meaning as in Table 1. ChemCor 191 C30 was commercially obtained from ChemCor and was reported by its supplier to be a 29 - 31 % emulsion in water of high density linear crystalline polyethylene stabilized with a cationic dispersing agent.

**Table 3**

| **Composition Number** | **Parts by Mass in Composition of:** | | | | | | |
|---|---|---|---|---|---|---|---|
| | **Deionized Water** | **75 % H**_{**3**}**PO**_{**4**} | **60 % H**_{**2**}**TiF**_{**6**} | **Component (C)** | **Component (D)** | **Component (E)** | |
| | | | | | | **ChemCor KSL30N** | **ChemCor 191C30** |
| 2.0 | 129 | 10 | 6.0 | 5.0 | 6.0 | | |
| 2.1 | 129 | 10 | 6.0 | 5.0 | 6.0 | 10 | |
| 2.2 | 129 | 10 | 6.0 | 5.0 | 6.0 | | 10 |

Substrates cleaned as described above were coated with these compositions and with NOVABRIGHT® C 1005, an HST commercial product for passivating galvanized steel surfaces, in the same manner as for Group 1, then these panels and others obtained from commercial plant scale coating processes were tested in salt spray in the same manner as for Group 1. Measured coating add-on masses per unit area, peak metal temperatures during drying as part of treatment according to this invention or with a comparison product, and salt spray test results are shown in Table 4. Replicate panels were used, and the intended replicates are shown one under the other in Table 4, with entries in the two leftmost columns of this table also applying to blank cells between themselves and the next entry in the same column.

### EXAMPLE AND COMPARISON EXAMPLE GROUP 3

In this group the frictional properties of coatings formed according to the invention were evaluated. Compositions 2.0 and 2.2 from group 2 were used again, along with a Composition 3 according to the invention that had the same materials as Composition 2.2 except that the amount of ChemCor 191C30 used was doubled while

**Table 4**

| **Composition Identification** | **Peak Metal Temperature, °C** | **Coating Add-On Mass, g/m**^{**2**} | **Salt Spray Test Result After:** | | | |
|---|---|---|---|---|---|---|
| | | | **24 Hours** | **48 Hours** | **72 Hours** | **96 Hours** |
| 2.0 | 66 | 2.6 | 25 | 25 | 25 | 25 |
| | | 2.6 | 50 | 60 | 60 | 60 |
| | | 1.0 | 2 | 2 | 10 | 15 |
| | | 1.6 | N | <1 | 2 | 2 |
| 2.1 | 66 | 2.7 | 10 | 10 | 10 | 10 |
| | | 2.1 | 1 | 2 | 5 | 10 |
| | | 1.3 | 1 | 2 | 5 | 10 |
| | | 1.4 | N | <1 | 1 | 2 |
| 2.2 | 66 | 2.5 | 2 | 5 | 5 | 10 |
| | | 2.3 | 2 | 5 | 5 | 5 |
| | | 1.4 | 1 | 5 | 15 | 20 |
| | | 1.0 | N | 2 | 5 | 10 |
| | 121 | 2.0 | 1 | 5 | 5 | 10 |
| | | 2.4 | 5 | 5 | 5 | 5 |
| | | 1.0 | N | 5 | 5 | 15 |
| | | 1.2 | 1 | 2 | 5 | 10 |
| NBG | 66 | 2.3 | 10 | 95* | 100* | 100* |
| | | 1.7 | 60 | 100* | 100* | 100* |
| | | 1.4 | 40 | 99* | 100* | 100* |
| | | 1.4 | 60 | 90* | 100* | 100* |
| NBG-c | n.k. | n.k. | 75 | 99* | 100* | 100* |
| | | n.k. | 75 | 95* | 100* | 100* |
| X-c | | n.k. | 95 | 100* | 100* | 100* |
| | | n.k. | 95 | 100* | 100* | 100* |
| No treatment | - | - | 75* | 100* | 100* | 100* |
| Footnote and Abbreviations for Table 4 *At least part of this rust was red; otherwise, all of the rust observed was white. Where it is observed, red rust signifies such extensive corrosion that the galvanized coating on the substrate is completely penetrated, allowing red iron rust to replace white corrosion products from zinc. "NBG" means "NOVABRIGHT® C 1005 commercial passivating product; "-c" taken from a large-scale commercial line using the treatment named at the left; "X" means a product believed to be commercial, but processed in a manner not known in detail; "n.k." means "not known"; "-" indicates "not applicable". | | | | | | |

the amounts of other components remained the same, and the commercial products described in Group 2 were also used again. At least two flat panels of hot-dip-galvanized steel were treated with each composition in the same general manner as described for Group 2. The treated and dried substrates were then tested for average coefficient of friction on a draw bench under a pressure of 17 bars. This test produces a graph of drawing force against time, which is functionally equivalent to distance, as the moving frictional element of the draw bench is drawn along the full length of the stationary tested panel. The drawing force typically rises very rapidly at the beginning and then remains steady or slightly declines during the remainder of the test. The peak drawing force measured during the initial rapid rise is recorded as the initial force. The entire time length of the graph is divided into four equal intervals, and the coefficients of friction corresponding to the initial drawing force and the drawing forces measured from the graph at the ends of each of the four intervals are shown in Table 5 below. Intended replicates are shown one under another in the Table, with an Average for the coating type after each group of replicates. The results indicate that the compositions according to the invention are superior in this property to the current standard commercial products, with the composition containing an intermediate amount of wax giving lower friction than the one with no wax or the higher amount.

**Table 5**

| **Coating Type** | **Coefficient of Friction ("µ"):** | | | | | **Average µ for All Five Measurements** |
|---|---|---|---|---|---|---|
| | **Initial** | **Measured at the End of Interval Number:** | | | | |
| | | **1** | **2** | **3** | **4** | |
| 2.0 | 0.59 | 0.44 | 0.41 | 0.65 | 0.28 | 0.51 |
| | 0.64 | 0.53 | 0.45 | 0.36 | 0.35 | 0.45 |
| | 0.76 | 0.59 | 0.53 | 0.47 | 0.42 | 0.51 |
| 2.0 Average | 0.66 | 0.52 | 0.46 | 0.50 | 0.35 | 0.42 |
| 2.2 | 0.42 | 0.42 | 0.41 | 0.40 | 0.37 | 0.41 |
| | 0.39 | 0.40 | 0.40 | 0.36 | 0.35 | 0.39 |
| | 0.42 | 0.45 | 0.46 | 0.44 | 0.42 | 0.45 |
| | 0.45 | 0.47 | 0.44 | 0.41 | 0.39 | 0.44 |
| 2.2 Average | 0.42 | 0.43 | 0.43 | 0.40 | 0.38 | 0.42 |
| 3 | 0.77 | 0.58 | 0.46 | 0.34 | 0.34 | 0.46 |
| | 0.62 | 0.59 | 0.56 | 0.55 | 0.42 | 0.56 |
| | 0.65 | 0.48 | 0.46 | 0.45 | 0.45 | 0.46 |
| 3 Average | 0.68 | 0.54 | 0.49 | 0.45 | 0.40 | 0.50 |
| NBG | 0.38 | 0.57 | 0.63 | 0.57 | 0.51 | 0.59 |
| | 0.42 | 0.42 | 0.42 | 0.44 | 0.39 | 0.43 |
| NBG-c | n.k. | 0.64 | 0.63 | 0.58 | n.k. | 0.62 |
| | n.k. | 0.59 | 0.53 | 0.41 | n.k. | 0.51 |
| NBG Avg. | 0.40 | 0.56 | 0.55 | 0.50 | 0.45 | 0.54 |
| X-c | n.k. | 0.70 | 0.76 | 0.70 | n.k. | 0.72 |
| | n.k. | 0.68 | 0.61 | 0.58 | n.k. | 0.62 |
| X-c Average | - | 0.69 | 0.69 | 0.64 | - | 0.67 |

## Claims

1. A process for treatment of a metal surface to form thereon an adherent solid coating that imparts to the metal surface at least one of the following changes:
(i) protecting the treated surface from corrosion more effectively than in the absence of any such coating;
(ii) improving the adhesion of a subsequently-applied coating, as compared to the adhesion that would be achieved between the same subsequently applied coating and the uncoated metallic surface; and
(iii) allowing the treated metallic surface to be satisfactorily cold-worked without the need for any liquid organic lubricant; said process comprising operations of:
(I) coating said metal surface with a layer of an aqueous liquid composition comprising water and:
(A) a component of dissolved phosphorus-containing anions;
(B) a dissolved component selected from simple and complex anions containing fluorine atoms;
(C) a component consisting of dissolved, and/or dispersed materials (α) and/or (β), wherein:
(α) consists of polymer molecules each of which has at least one unit conforming to the general formula (II): 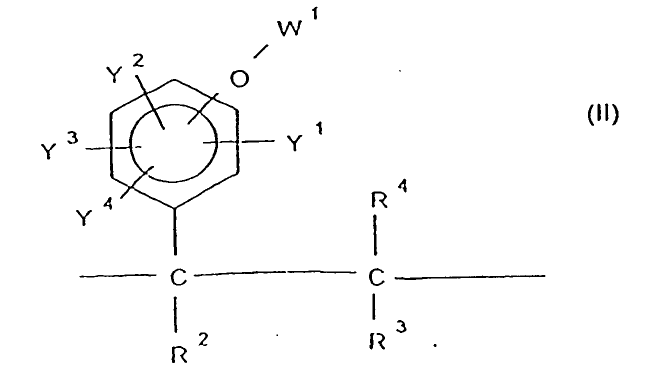 (wherein:
- each of R² through R⁴ is selected, independently, from a hydrogen moiety, an alkyl moiety with from 1 to 5 carbon atoms, and an aryl moiety with from 6 to 18 carbon atoms;
- each of Y¹ through Y⁴ is selected, independently except as noted further below, from: a hydrogen moiety; a -CH₂CI moiety: an alkyl moiety with from 1 to 18 carbon atoms; an aryl moiety with from 6 to 18 carbon atoms; a moiety conforming to the general formula
-CR¹²R¹³OR¹⁴
[where each of R¹² through R¹⁴ is selected from the group consisting of a hydrogen moiety, an alkyl moiety, an aryl moiety, a hydroxyalkyl moiety, an aminoalkyl moiety, a mercaptoalkyl moiety, and a phosphoalkyl moiety; and a moiety Z that conforms to one of the two following general formulae: 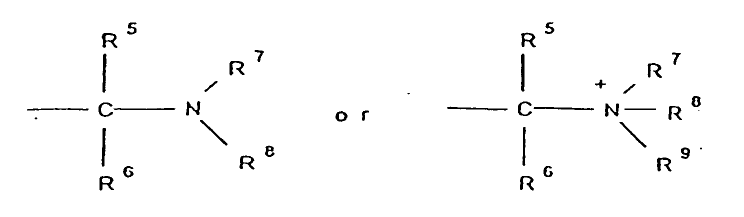 {where each of R⁵ through R⁸ is selected, independently, from a hydrogen moiety, an alkyl moiety, an aryl moiety, a hydroxyalkyl moiety, an aminoalkyl moiety, a mercaptoalkyl moiety and a phosphoalkyl moiety; and R⁹ is selected from a hydrogen moiety, an alkyl moiety, an aryl moiety, a hydroxy or polyhydroxy alkyl moiety, an amino or polyamino alkyl moiety, a mercapto or polymercapto alkyl moiety, a phospho or polyphospho alkyl moiety, an -O⁻ moiety, and an -OH moiety}]; and provided however that at least one of Y¹ through Y⁴ in at least one unit of each selected polymer molecule is a moiety Z as above defined;
and
- W¹ is selected, independently, from a hydrogen moiety, an acyl moiety, an acetyl moiety, a benzoyl moiety; a 3-allyloxy-2-hydroxypropyl moiety; a 3-benzyloxy-2-hydroxypropyl moiety; a 3-butoxy-2-hydroxpropyl moiety; a 3-alkyloxy-2-hydroxypropyl moiety; a 2-hyxroxyoctyl moiety; a 2-hydroxyalkyl moiety; a 2-hydroxy-2-phenylethyl moiety; a 2-hydroxy-2-alkylphenylethyl moiety; a benzyl, methyl, ethyl, propyl, unsubstituted alkyl, unsubstituted allyl, or unsubstituted alkylbenzyl moiety; a halo or polyhalo alkyl, or halo or polyhalo alkenyl moiety; a moiety derived from a condensation polymerization product of ethylene oxide, propylene oxide or a mixture thereof by deleting one hydrogen atom therefrom; and a sodium, potassium, lithium, ammonium or substituted ammonium, or phosphonium or substituted phosphonium cation moiety); and
(β) consists of polymer molecules each of which does not include a unit conforming to general formula (II) as given above, but does include at least one unit corresponding to the general formula (III): 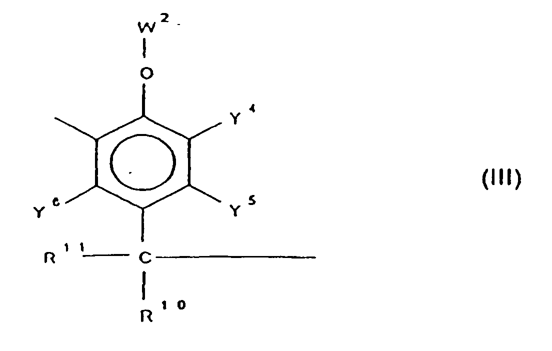 (wherein:
- each of R¹⁰ and R¹¹ is selected, independently, from a hydrogen moiety, an alkyl moiety with from 1 to 5 carbon atoms, and an aryl moiety with from 6 to 18 carbon atoms;
- each of Y⁴ through Y⁶ is selected, independently except as noted further below, from:
a hydrogen moiety; a -CH₂Cl moiety; an alkyl moiety with from 1 to 18 carbon atoms; an aryl moiety with from 6 to 18 carbon atoms; a moiety conforming to the general formula
-CR¹²R¹³OR¹⁴,
where each of R¹² through R¹⁴ is selected from a hydrogen moiety, an alkyl moiety, an aryl moiety, a hydroxyalkyl moiety, an aminoalkyl moiety, a mercaptoalkyl moiety, a phosphoalkyl moiety, and a moiety Z as defined for material (α) above
provided however that at least one of Y¹ through Y⁴ in at least one unit of each selected polymer molecule is a moiety Z as defined; and
- W² is selected, independently, from a hydrogen moiety, an acyl moiety, an acetyl moiety, a benzoyl moiety, a 3-allyloxy-2-hydroxypropyl moiety, a 3-benzyloxy-2-hydroxypropyl moiety, a 3-butoxy-2-hydroxypropyl moiety, a 3-alkyloxy-2-hydroxypropyl moiety, a 2-hydroxyoctyl moiety, a 2-hydroxyalkyl moiety, a 2-hydroxy-2-phenylethyl moiety; a 2-hydroxy-2-alkylphenylethyl moiety, a benzyl, methyl, ethyl, propyl, unsubstituted alkyl, unsubstituted allyl or unsubstituted alkylbenzyl moiety, a halo or polyhalo alkyl, or halo or polyhalo alkenyl moiety, a moiety derived from a condensation polymerization product of ethylene oxide, propylene oxide or a mixture thereof by deleting one hydrogen atom therefrom, and a sodium, potassium, lithium, ammonium or substituted ammonium, or phosphonium or substituted phosphonium cation moiety);
provided always that it be understood that the phrase "polymer molecule" in the above definitions of materials (α) and (β) includes any electrically-neutral molecule with a molecular weight of at least 300 daltons;
(D) a component of dissolved and/or stably-dispersed film-forming molecules, said molecules not being part of any of immediately-previously recited components (A) through (C) and being selected from the group consisting of polymers of vinyl esters, styrene, vinyl chloride, vinylidene chloride, acrylic acid, methacrylic acid, esters of acrylic acid, esters of methacrylic acid, nitriles of acrylic acid, nitriles of methacrylic acid, amides of acrylic acid, and amides of methacrylic acid, and polysaccharides; and
(E) a component of stably dispersed solid material, wherein said solid material in isolated form has a coefficient of static friction, measured between two pieces of the solid material itself or between the solid material and cold rolled steel, that is not greater than 0.35, this solid material not being part of any of components (A) through (D), the volume of component (E) in said aqueous liquid composition being such that an equal volume of high density polyethylene has a mass with a ratio to the mass of component (D) present in the same liquid composition that is in the range of from 0.005:1.0 to 0.40:1.0; and
(II) drying into place over the metal surface the non-volatile contents of the liquid layer formed in operation (I), so as to form said solid coating.

2. A process as claimed in claim 1, wherein in component (D), said molecules are self-crosslinking

3. A process as claimed in claim 1 or claim 2, wherein the aqueous liquid composition in step (I) has been made by mixing water and sources of components (A), (B), (C) and (D); and wherein said sources of components (A) and (B) are water-soluble.

4. A process as claimed in any of the preceding claims, wherein in component (D), said molecules have a glass transition temperature that is not more than 75°C.

5. A process as claimed in any of the preceding claims, wherein in component (D), said molecules have a glass transition temperature of at least 15°C but not more than 55°C.

6. A process as claimed in any of the preceding claims, wherein in component (D), said molecules are in the form of polymer latex dispersions in water.

7. A process as claimed in any of the preceding claims, wherein in component (D), said molecules are selected from the group consisting of polyacrylic acids, styrene-acrylic copolymers, and acrylic acid copolymers.

8. A process as claimed in any of the preceding claims, wherein:
- the solid layer formed in operation (II) has a mass per unit area of the metal surface coated that is in the range of from 0.2 to 10 g/m²; and
- either:
- component (B) includes at least one of the elements boron, silicon, titanium, zirconium and hafnium in anions that also contain fluorine atoms, and the ratio of the concentration of the total of the elements boron, silicon, titanium, zirconium, and hafnium in the liquid composition from which a layer is formed in step (I) to the stoichiometrically equivalent concentration as phosphorus atoms of component (A) in said aqueous liquid composition, is in the range of from 0.03:1.0 to 2.0:1.0;
or
- component (B) does not include any of the elements boron, silicon, titanium, zirconium and hafnium, and the ratio of the concentration of fluorine atoms in the liquid composition from which a layer is formed in step (I) to the stoichiometrically equivalent concentration as phosphorus atoms of component (A) in the same liquid composition is in the range of from 0.3:1.0 to 7:1.0;
- in said aqueous liquid composition, the ratio of the concentration of component (C), to the stoichiometrically equivalent concentration as H₃PO₄ of component (A), is in the range of from 0.02:1.0 to 2.0:1.0; and
- in said aqueous liquid composition, the ratio of the concentration of component (D), to the concentration of component (A) is in the range of from 0.3:1.0 to 15:1.0.

9. A process as claimed in claim 8, wherein component (E) comprises one or more organic materials selected from solid paraffins, synthetic polyethylene polymers, synthetic polypropylene polymers, partially or fully halogenated polyethylene or polypropylene polymers, and other natural or synthetic waxes.

10. A process as claimed in claim 8 or claim 9, wherein:
- component (A) was provided to the composition as orthophosphoric acid or at least one salt thereof;
- component (B) is selected from anions with one of the chemical formulae BF₄⁻¹, SiF₆⁻², TiF₆⁻², ZrF₆⁻², and HfF₆⁻²;
- component (C) is selected from molecules of type (α) when:
- each of R² through R⁶, R¹⁰, R¹¹, W¹, and W² is a hydrogen atom moiety;
- each of Y¹ through Y⁶ is a hydrogen atom moiety or a moiety Z;
- averaged over the entire content of component (C), each polymer molecule contains a number of units corresponding to general formulae (II) as defined above that is in the range of from 5 to 50;
- averaged over the entire content of component (C), the number of moietes Z has a ratio to the number of aromatic nuclei that is the range of from 0.20:1.0 to 2.0:1.0;
- averaged over the entire content of component (C), the number of polyhydroxyl moieties Z, which are defined as those moieties Z in which at least R⁸ in the general formulae for moieties Z has (i) from 4 to 6 carbon atoms and (ii) as many hydroxyl groups, each attached to a distinct one of the carbon atoms, as one less than the number of carbon atoms in the R⁸ moiety, has a ratio to the total number of moieties Z in the composition that is at least about 0.50:1.0; and
- R⁷ is an alkyl moiety with not more than 3 carbon atoms.

11. A process as claimed in claim 10, wherein:
- the solid layer formed in operation (II) has a mass per unit area of the metal surface coated that is in the range of from 0.80 to 4.0 g/m²;
- component (B) includes at least one of the elements boron, silicon, titanium, zirconium, and hafnium in anions that also contain fluorine atoms, and the ratio of the concentration of the total of the elements boron, silicon, titanium, zirconium, and hafnium in the liquid composition from which a layer is formed in step (I) to the stoichiometrically equivalent concentration as phosphorus atoms of component (A), is in the range of from 0.12:1.0 to 0.40:1.0;
- in said aqueous liquid composition, the ratio of the concentration of component (C), to the stoichiometrically equivalent concentration as H₃PO₄ of component (A), is in the range of from 0.08:1.0 to 0.40:1.0;
- in said aqueous liquid composition, the ratio of the concentration of component (D), to the concentration of component (A) is in the range of from 0.9:1.0 to 4.0:1.0; and
- the liquid composition also contains component (E) of stably dispersed solid material that in isolated form has a coefficient of static friction, measured between two pieces of the solid material itself or between the solid material and cold rolled steel, that is not greater than 0.16, this solid material not being part of any of components (A) through (D), the volume of component (E) being such that an equal volume of high density polyethylene has a mass with a ratio to the mass of component (D) present in the same liquid composition that is in the range of from 0.025:1.0 to 10:1.0.

12. A process as claimed in claim 11, wherein:
- the solid layer formed in operation (II) has a mass per unit area of the metal surface coated that is in the range of from 1.5 to 2.5 g/m²;
- in said aqueous liquid composition, component (B) is hexafluorotitanic acid, and the ratio of the concentration of titanium in component (B) to the stoichiometrically equivalent concentration as phosphorus atoms of component (A), is in the range of from 0.21:1.0 to 0.35:1.0;
- component (C) is selected from polymers of 4-vinyl phenol to which have been grafted Z moieties from reaction of formaldehyde and N-methyl glucamine, and the ratio of the concentration of component (C), to the stoichiometrically equivalent concentration as H₃PO₄ of component (A), is in the range of from 0.14:1.0 to 0.35:1.0;
- in said aqueous liquid composition, the ratio of the concentration of component (D) to the concentration of component (A) is in the range of from 1.5:1.0 to 2.9:1.0; and
- component (E) is high density polyethylene and has a mass with a ratio to the mass of component (D) present in the same liquid composition that is in the range of from 0.042:1.0 to 0.10:1.0.

13. A process as claimed in any one of claims 1 to 9, wherein component (C) consists of molecules of type (α) and molecules of type (β).

14. A process as claimed in any of the preceding claims, wherein component (E) further comprises a cationic dispersing agent.

## Patentansprüche

1. Verfahren zur Behandlung einer Metalloberfläche, so dass eine anhaftende feste Beschichtung darauf entsteht, die der Metalloberfläche wenigstens eine der folgenden Änderungen verleiht:
(i) effektiverer Schutz der behandelten Oberfläche vor Korrosion als ohne eine solche Beschichtung;
(ii) Verbesserung der Haftung einer anschließend aufgebrachten Beschichtung gegenüber der Haftung, die man zwischen derselben anschließend aufgebrachten Beschichtung und der unbeschichteten Metalloberfläche erreichen würde; und
(iii) die behandelte Metalloberfläche kann in befriedigender Weise kaltverarbeitet werden, ohne dass ein flüssiges organisches Gleitmittel notwendig ist;
wobei das Verfahren die folgenden Schritte umfasst:
(I) Beschichten der Metalloberfläche mit einer Schicht aus einer wässrigen flüssigen Zusammensetzung, die Wasser umfasst sowie:
(A) eine Komponente mit gelösten phosphorhaltigen Anionen;
(B) eine gelöste Komponente, die aus einfachen und komplexen, Fluoratome enthaltenden Anionen ausgewählt ist;
(C) eine Komponente, die aus gelösten und/oder dispergierten Materialien (α) und/oder (β) besteht, wobei:
(α) aus Polymermolekülen besteht, die jeweils wenigstens eine Einheit aufweisen, die der allgemeinen Formel (II) entspricht: 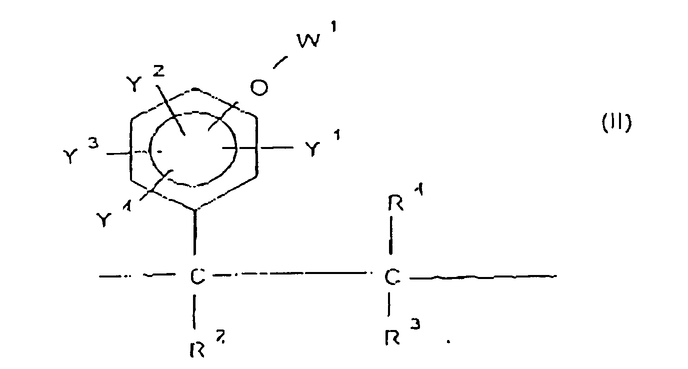 (wobei:
- R² bis R⁴ jeweils unabhängig aus einem Wasserstoffatom, einer Alkylgruppe mit 1 bis 5 Kohlenstoffatomen und einer Arylgruppe mit 6 bis 18 Kohlenstoffatomen ausgewählt sind;
- Y¹ bis Y⁴ jeweils unabhängig, mit der unten angegebenen Ausnahme, aus einem Wasserstoffatom, einer CH₂Cl-Gruppe, einer Alkylgruppe mit 1 bis 18 Kohlenstoffatomen, einer Arylgruppe mit 6 bis 18 Kohlenstoffatomen und einer Struktureinheit, die der allgemeinen Formel
-CR¹²R¹³OR¹⁴
entspricht, ausgewählt sind
[wobei R¹² bis R¹⁴ jeweils aus der Gruppe ausgewählt sind, die aus einem Wasserstoffatom, einer Alkylgruppe, einer Arylgruppe, einer Hydroxyalkylgruppe, einer Aminoalkylgruppe, einer Mercaptoalkylgruppe und einer Phosphoalkylgruppe sowie einer Struktureinheit Z, die einer der beiden folgenden allgemeinen Formeln 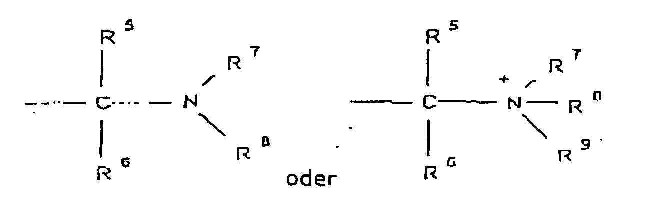 entspricht, besteht
{wobei R⁵ bis R⁸ jeweils unabhängig aus einem Wasserstoffatom, einer Alkylgruppe, einer Arylgruppe, einer Hydroxyalkylgruppe, einer Aminoalkylgruppe, einer Mercaptoalkylgruppe und einer Phosphoalkylgruppe ausgewählt sind und R⁹ aus einem Wasserstoffatom, einer Alkylgruppe, einer Arylgruppe, einer Hydroxy- oder Polyhydroxyalkylgruppe, einer Amino-oder Polyaminoalkylgruppe, einer Mercapto- oder Polymercaptoalkylgruppe, einer Phospho- oder Polyphosphoalkylgruppe, einer Gruppe -O⁻- und einer OH-Gruppe ausgewählt ist}];
mit der Maßgabe, dass wenigstens einer der Reste Y¹ bis Y⁴ in wenigstens einer Einheit jedes ausgewählten Polymermoleküls eine Struktureinheit Z ist, wie sie oben definiert ist; und
- W¹ unabhängig ausgewählt ist aus einem Wasserstoffatom, einer Acylgruppe, einer Acetylgruppe, einer Benzoylgruppe, einer 3-Allyloxy-2-hydroxypropyl-Gruppe, einer 3-Benzyloxy-2-hydroxypropyl-Gruppe, einer 3-Butoxy-2-hydroxypropyl-Gruppe, einer 3-Alkyloxy-2-hydroxypropyl-Gruppe, einer 2-Hydroxyoctylgruppe, einer 2-Hydroxyalkylgruppe, einer 2-Hydroxy-2-phenylethylgruppe, einer 2-Hydroxy-2-alkylphenylethyl-Gruppe, einer Benzyl-, Methyl-, Ethyl-, Propyl-, unsubstituierten Alkyl-, unsubstituierten Allyl- oder unsubstituierten Alkylbenzylgruppe, einer Halogen- oder Polyhalogenalkyl- oder Halogen- oder Polyhalogenalkenylgruppe, einer Struktureinheit, die von einem Kondensationspolymerisationsprodukt von Ethylenoxid, Propylenoxid oder einem Gemisch davon abgeleitet ist, indem man ein Wasserstoffatom daraus entfernt, und einer Natrium-, Kalium-, Lithium-, Ammonium- oder substituierten Ammonium- oder Phosphonium-oder substituierten Phosphoniumkation-Struktureinheit); und
(β) aus Polymermolekülen besteht, die jeweils keine Einheit umfassen, die der oben angegebenen allgemeinen Formel (II) entspricht, sondern wenigstens eine Einheit umfassen, die der allgemeinen Formel (III) entspricht: 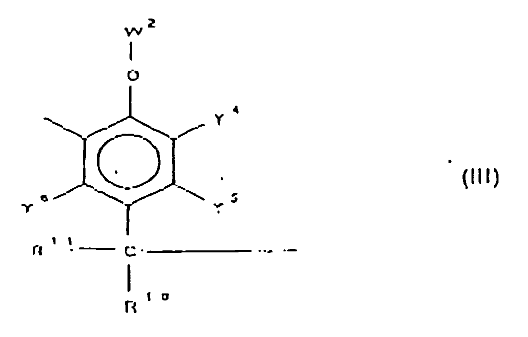 (wobei:
- R¹⁰ und R¹¹ jeweils unabhängig aus einem Wasserstoffatom, einer Alkylgruppe mit 1 bis 5 Kohlenstoffatomen und einer Arylgruppe mit 6 bis 18 Kohlenstoffatomen ausgewählt sind;
- Y⁴ bis Y⁶ jeweils unabhängig, mit der unten angegebenen Ausnahme, aus einem Wasserstoffatom, einer CH₂Cl-Gruppe, einer Alkylgruppe mit 1 bis 18 Kohlenstoffatomen, einer Arylgruppe mit 6 bis 18 Kohlenstoffatomen und einer Struktureinheit, die der allgemeinen Formel
-CR¹²R¹³OR¹⁴
entspricht, ausgewählt sind,
wobei R¹² bis R¹⁴ jeweils aus einem Wasserstoffatom, einer Alkylgruppe, einer Arylgruppe, einer Hydroxyalkylgruppe, einer Aminoalkylgruppe, einer Mercaptoalkylgruppe, einer Phosphoalkylgruppe sowie einer Struktureinheit Z, wie sie oben für Material (α) definiert ist, ausgewählt ist;
mit der Maßgabe, dass wenigstens einer der Reste Y¹ bis Y⁴ in wenigstens einer Einheit jedes ausgewählten Polymermoleküls eine Struktureinheit Z ist, wie sie oben definiert ist; und
- W² unabhängig ausgewählt ist aus einem Wasserstoffatom, einer Acylgruppe, einer Acetylgruppe, einer Benzoylgruppe, einer 3-Allyloxy-2-hydroxypropyl-Gruppe, einer 3-Benzyloxy-2-hydroxypropyl-Gruppe, einer 3-Butoxy-2-hydroxypropyl-Gruppe, einer 3-Alkyloxy-2-hydroxypropyl-Gruppe, einer 2-Hydroxyoctylgruppe, einer 2-Hydroxyalkylgruppe, einer 2-Hydroxy-2-phenylethylgruppe, einer 2-Hydroxy-2-alkylphenylethyl-Gruppe, einer Benzyl-, Methyl-, Ethyl-, Propyl-, unsubstituierten Alkyl-, unsubstituierten Allyl- oder unsubstituierten Alkylbenzylgruppe, einer Halogen- oder Polyhalogenalkyl- oder Halogen- oder Polyhalogenalkenylgruppe, einer Struktureinheit, die von einem Kondensationspolymerisationsprodukt von Ethylenoxid, Propylenoxid oder einem Gemisch davon abgeleitet ist, indem man ein Wasserstoffatom daraus entfernt, und einer Natrium-, Kalium-, Lithium-, Ammonium- oder substituierten Ammonium- oder Phosphonium-oder substituierten Phosphoniumkation-Struktureinheit);
stets mit der Maßgabe, dass man sich darüber im Klaren sein muss, dass der Ausdruck "Polymermolekül" in den obigen Definitionen der Materialien (α) und (β) jedes elektrisch neutrale Molekül mit einem Molekulargewicht von wenigstens 300 Dalton umfasst;
(D) eine Komponente mit gelösten und/oder stabil dispergierten filmbildenden Molekülen, wobei die Moleküle nicht Bestandteil einer der soeben aufgezählten Komponenten (A) bis (C) sind und aus der Gruppe ausgewählt sind, die aus Polymeren von Vinylestern, Styrol, Vinylchlorid, Vinylidenchlorid, Acrylsäure, Methacrylsäure, Estern von Acrylsäure, Estern von Methacrylsäure, Nitrilen von Acrylsäure, Nitrilen von Methacrylsäure, Amiden von Acrylsäure und Amiden von Methacrylsäure sowie Polysacchariden besteht; und
(E) eine Komponente mit stabil dispergiertem festem Material, wobei das feste Material in isolierter Form einen zwischen zwei Stücken des festen Materials selbst oder zwischen dem festen Material und kaltgewalztem Stahl gemessenen Haftreibungskoeffizienten von nicht mehr als 0,35 hat, wobei dieses feste Material nicht Bestandteil einer der Komponenten (A) bis (D) ist, wobei das Volumen der Komponente (E) in der wässrigen flüssigen Zusammensetzung so groß ist, dass ein gleiches Volumen von Polyethylen hoher Dichte eine Masse hat mit einem Verhältnis zur Masse der in derselben flüssigen Zusammensetzung vorhandenen Komponente (D), das im Bereich von 0,005:1,0 bis 0,40:1,0 liegt; und
(II) Auftrocknen der nichtflüchtigen Bestandteile der in Schritt (I) gebildeten flüssigen Schicht auf die Metalloberfläche unter Bildung der festen Beschichtung.

2. Verfahren gemäß Anspruch 1, wobei die Moleküle in Komponente (D) selbstvernetzend sind.

3. Verfahren gemäß Anspruch 1 oder 2, wobei die wässrige flüssige Zusammensetzung in Schritt (I) hergestellt wird, indem man Wasser und Quellen für die Komponenten (A), (B), (C) und (D) miteinander mischt, und wobei die Quellen für die Komponenten (A) und (B) wasserlöslich sind.

4. Verfahren gemäß einem der vorstehenden Ansprüche, wobei die Moleküle in Komponente (D) eine Glasübergangstemperatur haben, die nicht größer als 75 °C ist.

5. Verfahren gemäß einem der vorstehenden Ansprüche, wobei die Moleküle in Komponente (D) eine Glasübergangstemperatur von wenigstens 15 °C, aber nicht mehr als 55 °C haben.

6. Verfahren gemäß einem der vorstehenden Ansprüche, wobei die Moleküle in Komponente (D) in Form von Polymerlatexdispersionen in Wasser vorliegen.

7. Verfahren gemäß einem der vorstehenden Ansprüche, wobei die Moleküle in Komponente (D) aus der Gruppe ausgewählt sind, die aus Polyacrylsäuren, Styrol-Acryl-Copolymeren und Acrylsäure-Copolymeren besteht.

8. Verfahren gemäß einem der vorstehenden Ansprüche, wobei:
- die in Schritt (II) gebildete feste Schicht eine Masse pro Flächeneinheit der beschichteten Metalloberfläche hat, die im Bereich von 0,2 bis 10 g/m² liegt; und
- entweder:
- Komponente (B) wenigstens eines der Elemente Bor, Silicium, Titan, Zirconium und Hafnium in Anionen, die außerdem Fluoratome enthalten, umfasst und das Verhältnis der Konzentration der Gesamtheit der Elemente Bor, Silicium, Titan, Zirconium und Hafnium in der flüssigen Zusammensetzung, aus der in Schritt (I) eine Schicht gebildet wird, zu der stöchiometrisch äquivalenten Konzentration als Phosphoratome der Komponente (A) in der wässrigen flüssigen Zusammensetzung im Bereich von 0,03;1,0 bis 2,0:1,0 liegt;
oder
- Komponente (B) keines der Elemente Bor, Silicium, Titan, Zirconium und Hafnium umfasst und das Verhältnis der Konzentration von Fluoratomen in der flüssigen Zusammensetzung, aus der in Schritt (I) eine Schicht gebildet wird, zu der stöchiometrisch äquivalenten Konzentration als Phosphoratome der Komponente (A) in derselben flüssigen Zusammensetzung Im Bereich von 0,3:1,0 bis 7: 1,0 liegt;
- das Verhältnis der Konzentration von Komponente (C) zur stöchiometrisch äquivalenten Konzentration als H₃PO₄ der Komponente (A) in der wässrigen flüssigen Zusammensetzung im Bereich von 0,02:1,0 bis 2,0:1,0 liegt; und
- das Verhältnis der Konzentration von Komponente (D) zur Konzentration der Komponente (A) in der wässrigen flüssigen Zusammensetzung im Bereich von 0,3:1,0 bis 15:1,0 liegt.

9. Verfahren gemäß Anspruch 8, wobei Komponente (E) ein oder mehrere organische Materialien umfasst, die aus festen Paraffinen, synthetischen Polyethylenpolymeren, synthetischen Polypropylenpolymeren, teilweise oder vollständig halogenierten Polyethylen- oder Polypropylenpolymeren sowie anderen natürlichen oder synthetischen Wachsen ausgewählt sind.

10. Verfahren gemäß Anspruch 8 oder 9, wobei:
- Komponente (A) als Orthophosphorsäure oder wenigstens ein Salz davon zu der Zusammensetzung gegeben wurde;
- Komponente (B) aus Anionen mit einer der chemischen Formeln BF₄⁻, SiF₆²⁻, TiF₆² , ZrF₆²⁻ und HfF₆²⁻ ausgewählt ist;
- Komponente (C) aus Molekülen des Typs (α) ausgewählt ist, bei denen:
- R² bis R⁶, R¹⁰, R¹¹, W¹ und W² jeweils ein Wasserstoffatom sind;
- Y1 bis Y6 jeweils ein Wasserstoffatom oder eine Struktureinheit Z sind;
- jedes Polymermolekül, über den gesamten Gehalt an Komponente (C) gemittelt, eine Zahl von den oben definierten allgemeinen Formeln (II) entsprechenden Einheiten enthält, die im Bereich von 5 bis 50 liegt;
- die Zahl der Struktureinheiten Z, über den gesamten Gehalt an Komponente (C) gemittelt, ein Verhältnis zur Zahl der aromatischen Kerne aufweist, das im Bereich von 0,20:1,0 bis 2,0:1,0 liegt;
- die Zahl der Polyhydroxy-Struktureinheiten Z, über den gesamten Gehalt an Komponente (C) gemittelt, welche als solche Struktureinheiten Z definiert sind, bei denen wenigstens R⁸ in den allgemeinen Formeln für die Struktureinheiten Z (i) 4 bis 6 Kohlenstoffatome und (ii) so viele Hydroxygruppen, die jeweils an ein anderes Kohlenstoffatom gebunden sind, aufweist, dass es eine weniger als die Zahl der Kohlenstoffatome in der R⁸-Struktureinheit sind, ein Verhältnis zur Gesamtzahl der Struktureinheiten Z in der Zusammensetzung hat, die wenigstens etwa 0,50:1,0 beträgt; und
- R⁷ eine Alkylgruppe mit nicht mehr als 3 Kohlenstoffatomen ist.

11. Verfahren gemäß Anspruch 10, wobei:
- die in Schritt (II) gebildete feste Schicht eine Masse pro-Flächeneinheit der beschichteten Metalloberfläche hät, die im Bereich von 0,80 bis 4,0 g/m² liegt;
- Komponente (B) wenigstens eines der Elemente Bor, Silicium, Titan, Zirconium und Hafnium in Anionen, die außerdem Fluoratome enthalten, umfasst und das Verhältnis der Konzentration der Gesamtheit der Elemente Bor, Silicium, Titan, Zirconium und Hafnium in der flüssigen Zusammensetzung, aus der in Schritt (I) eine Schicht gebildet wird, zu der stöchiometrisch äquivalenten Konzentration als Phosphoratome der Komponente (A) im Bereich von 0,12:1,0 bis 0,40:1,0 liegt;
- das Verhältnis der Konzentration von Komponente (C) zur stöchlometrisch äquivalenten Konzentration als H₃PO₄ der Komponente (A) in der wässrigen flüssigen Zusammensetzung im Bereich von 0,08:1,0 bis 0,40:1,0 liegt;
- das Verhältnis der Konzentration von Komponente (D) zur Konzentration der Komponente (A) in der wässrigen flüssigen Zusammensetzung im Bereich von 0,9:1,0 bis 4,0:1,0 liegt; und
- die flüssige Zusammensetzung außerdem Komponente (E) mit stabil dispergiertem festem Material enthält, das in isolierter Form einen zwischen zwei Stücken des festen Materials selbst oder zwischen dem festen Material und kaltgewalztem Stahl gemessenen Haftreibungskoeffizienten von nicht mehr als 0,16 hat, wobei dieses feste Material nicht Bestandteil einer der Komponenten (A) bis (D) ist, wobei das Volumen der Komponente (E) so groß ist, dass ein gleiches Volumen von Polyethylen hoher Dichte eine Masse hat mit einem Verhältnis zur Masse der in derselben flüssigen Zusammensetzung vorhandenen Komponente (D), das im Bereich von 0,025:1,0 bis 10:1,0 liegt.

12. Verfahren gemäß Anspruch 11, wobei:
- die in Schritt (II) gebildete feste Schicht eine Masse pro Flächeneinheit der beschichteten Metalloberfläche hat, die im Bereich von 1,5 bis 2,5 g/m² liegt;
- Komponente (B) in der wässrigen flüssigen Zusammensetzung Hexafluorotitansäure ist und das Verhältnis der Konzentration von Titan in Komponente (B) zu der stöchiometrisch äquivalenten Konzentration als Phosphoratome der Komponente (A) im Bereich von 0,21:1,0 bis 0,35:1,0 liegt;
- Komponente (C) aus Polymeren von 4-Vinylphenol ausgewählt ist, auf die Z-Struktureinheiten aus einer Reaktion von Formaldehyd und N-Methylglucamin aufgepfropft wurden, und das Verhältnis der Konzentration von Komponente (C) zur stöchiometrisch äquivalenten Konzentration als H₃PO₄ der Komponente (A) im Bereich von 0,14:1,0 bis 0,35:1,0 liegt;
- das Verhältnis der Konzentration von Komponente (D) zur Konzentration der Komponente (A) in der wässrigen flüssigen Zusammensetzung im Bereich von 1,5:1,0 bis 2,9:1,0 liegt; und
- Komponente (E) Polyethylen hoher Dichte ist und eine Masse hat mit einem Verhältnis zu Masse der in derselben flüssigen Zusammensetzung vorhandenen Komponente (D), das im Bereich von 0,042:1,0 bis 0,10:1,0 liegt.

13. Verfahren gemäß einem der Ansprüche 1 bis 9, wobei Komponente (C) aus Molekülen des Typs (α) und Molekülen des Typs (β) besteht.

14. Verfahren gemäß einem der vorstehenden Ansprüche, wobei Komponente (E) weiterhin ein kationisches Dispersionsmittel umfasst.

## Revendications

1. Procédé pour le traitement d'une surface métallique afin de former sur celle-ci un revêtement solide adhérent qui confère à la surface métallique au moins un des changements suivants :
(i) une protection de la surface traitée contre la corrosion plus efficace qu'en l'absence de n'importe quel revêtement;
(ii) une amélioration de l'adhérence d'un revêtement appliqué ultérieurement, comparée à l'adhérence qui serait obtenue entre le même revêtement appliqué ultérieurement et la surface métallique non revêtue ; et
(iii) la possibilité pour la surface métallique traitée d'être travaillée à froid de manière satisfaisante sans le besoin d'un quelconque lubrifiant organique liquide ; ledit procédé comprenant les opérations :
(I) d'enduction de ladite surface métallique avec une couche d'une composition liquide aqueuse comprenant de l'eau et :
(A) un composant d'anions contenant du phosphore dissous ;
(B) un composant dissous choisi à partir d'anions simples et complexes contenant des atomes de fluor ;
(C) un composant consistant en matériaux (α) et/ou (β) dissous et/ou dispersés, dans lequel :
(α) consiste en molécules polymères, dont chacune d'elles possède au moins une unité se conformant à la formule générale (II) : 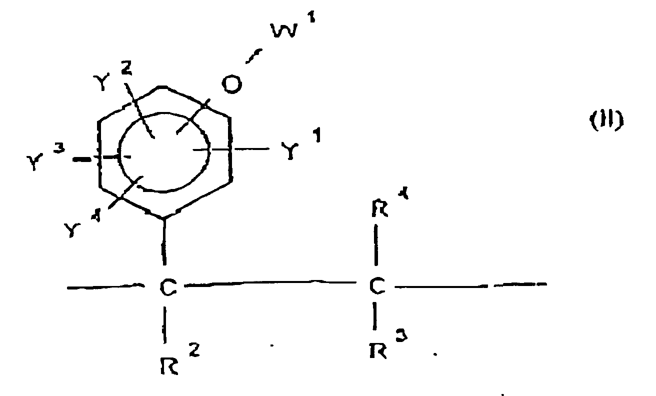 (dans laquelle :
- chacun des R² à R⁴ est choisi, de manière indépendante, parmi un groupe hydrogène, un groupe alkyle avec de 1 à 5 atomes de carbone et un groupe aryle avec de 6 à 18 atomes de carbone;
- chacun des Y¹ à Y⁴ est choisi de manière indépendante, excepté lorsque cela est noté plus bas, à partir d'un groupe hydrogène ; un groupe -CH₂Cl ; un groupe alkyle avec de 1 à 18 atomes de carbone; un groupe aryle avec de 6 à 18 atomes de carbone ; un groupe se conformant à la formule générale
-CR¹²R¹³OR¹⁴
[où chacun des R¹² à R¹⁴ est choisi à partir du groupe consistant en un groupe hydrogène, un groupe alkyle, un groupe aryle, un groupe hydroxyalkyle, un groupe aminoalkyle, un groupe mercaptoalkyle et un groupe phosphoalkyle ; et un groupe Z qui se conforme à une des deux formules générales suivantes : 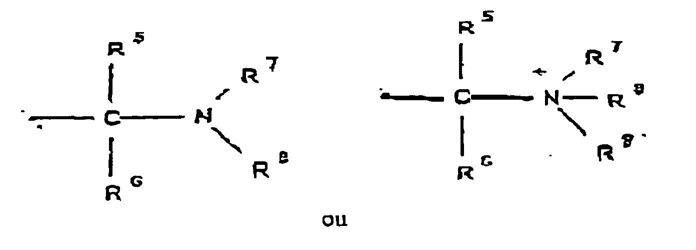 {où chacun des R⁵ à R⁸ est choisi, de manière indépendante, parmi un groupe hydrogène, un groupe alkyle, un groupe aryle, un groupe hydroxyalkyle, un groupe aminoalkyle, un groupe mercaptoalkyle et un groupe phosphoalkyle ; et R⁹ est choisi parmi un groupe hydrogène, un groupe alkyle, un groupe aryle, un groupe hydroxy
ou polyhydroxyalkyle, un groupe amino ou polyamino alkyle, un groupe mercapto ou polymercaptoalkyle, un groupe phospho ou polyphospho alkyle, un groupe -O⁻ et un groupe -OH}] ;
et à condition cependant qu'au moins un des Y¹ à Y⁴ dans au moins une unité de chaque molécule polymère choisie soit un groupe Z tel que défini ci-dessus ; et
- W¹ est choisi, de manière indépendante, parmi un groupe hydrogène, un groupe acyle, un groupe acétyle, un groupe benzoyle; un groupe 3-allyloxy-2-hydroxypropyle; un groupe 3-benzyloxy-2-hydroxypropyle ; un groupe 3-butoxy-2-hydroxypropyle; un groupe 3-alkyloxy-2-hydroxypropyle; un groupe 2-hydroxyoctyle; un groupe 2-hydroxyalkyle; un groupe 2-hydroxy-2-phényléthyle; un groupe 2-hydroxy-2-alkylphényléthyle; un groupe benzyle, méthyle, éthyle, propyle, alkyle non substitué, allyle non substitué ou alkylbenzyle non substitué; un groupe halogénure ou polyhalogénure d'alkyle, ou halogénure ou polyhalogénure d'alcényle ; un groupe dérivé d'un produit de polymérisation par condensation de l'oxyde d'éthylène, de l'oxyde de propylène ou d'un mélange de ceux-ci en éliminant un de leurs atomes d'hydrogène ; et un groupe cation sodium, potassium, lithium, ammonium ou ammonium substitué, ou phosphonium ou phosphonium substitué) ; et
(β) consiste en molécules polymères, dont chacune d'elles ne comprend pas une unité se conformant à la formule générale (II) telle que donnée ci-dessus, mais comprend au moins une unité correspondant à la formule générale (III) : 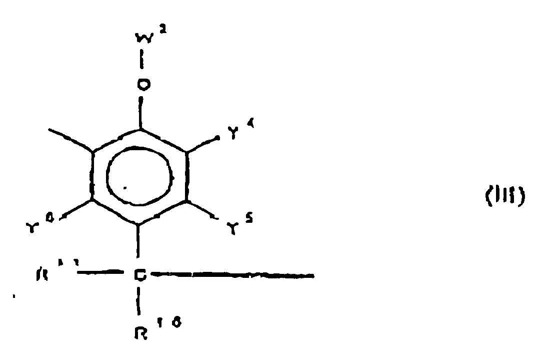 (dans laquelle
- chacun des R¹⁰ et R¹¹ est choisi, de manière indépendante, parmi un groupe hydrogène, un groupe alkyle avec de 1 à 5 atomes de carbone et un groupe aryle avec de 6 à 18 atomes de carbone ;
- chacun des Y⁴ à Y⁶ est choisi de manière indépendante excepté lorsque cela est noté plus bas, parmi :
un groupe hydrogène ; un groupe -CH₂Cl ; un groupe alkyle avec de 1 à 18 atomes de carbone ; un groupe aryle avec de 6 à 18 atomes de carbone ; un groupe se - conformant à la formule générale
-CR¹²R¹³OR¹⁴
où chacun des R¹² à R¹⁴ est choisi parmi un groupe hydrogène, un groupe alkyle, un groupe aryle, un groupe hydroxyalkyle, un groupe aminoalkyle, un groupe mercaptoalkyle, un groupe phosphoalkyle et un groupe Z tel que défini pour le matériau (α) ci-dessus
à condition cependant qu'au moins un des Y¹ à Y⁴ dans au moins une unité de chaque molécule polymère choisie soit un groupe Z tel que défini ; et
- W² est choisi, de manière indépendante, parmi un groupe hydrogène, un groupe acyle, un groupe acétyle, un groupe benzoyle, un groupe 3-allyloxy-2-hydroxypropyle, un groupe 3-benzyloxy-2-hydroxypropyle, un groupe 3-butoxy-2-hydroxypropyle, un groupe 3-alkyloxy-2-hydroxypropyle, un groupe 2-hydroxyoctyle, un groupe 2-hydroxyalkyle, un groupe 2-hydroxy-2-phényléthyle ; un groupe 2-hydroxy-2-alkylphényléthyle, un groupe benzyle, méthyle, éthyle, propyle, alkyle non substitué, allyle non substitué ou alkylbenzyle non substitué, un groupe halogénure ou polyhalogénure d'alkyle, ou halogénure ou polyhalogénure d'alcényle, un groupe dérivé d'un produit de polymérisation par condensation de l'oxyde d'éthylène, de l'oxyde de propylène ou d'un mélange de ceux-ci en éliminant un de leurs atomes d'hydrogène, et un groupe cation sodium, potassium, lithium, ammonium ou ammonium substitué, ou phosphonium ou phosphonium substitué) ; à condition qu'il soit toujours entendu que l'expression « molécule polymère », dans les définitions des matériaux (α) et (β) ci-dessus, comprend n'importe quelle molécule électriquement neutre avec une masse moléculaire d'au moins 300 daltons ;
(D) un composant de molécules dissoutes et/ou dispersées de manière stable formant un film, lesdites molécules ne faisant partie d'aucun des composants (A) à (C) immédiatement précédemment décrits, et étant choisi à partir du groupe consistant en des polymères d'esters de vinyle, de styrène, de chlorure de vinyle, de chlorure de vinylidène, d'acide acrylique, d'acide méthacrylique, d'esters d'acide acrylique, d'esters d'acide méthacrylique, de nitriles d'acide acrylique, de nitriles d'acide méthacrylique, d'amides d'acide acrylique et d'amides d'acide méthacrylique, et de polysaccharides, et
(E) un composant d'un matériau solide dispersé de manière stable, dans lequel ledit matériau solide sous sa forme isolée possède un coefficient de friction statique mesuré entre deux pièces du matériau solide lui-même, ou entre le matériau solide et de l'acier laminé à froid, qui n'est pas supérieur à 0,35, ce matériau solide ne faisant partie d'aucun des composants (A) à (D), le volume du composant (E) dans ladite composition liquide aqueuse étant tel qu'un volume égal de polyéthylène haute densité possède une masse avec un rapport sur la masse du composant (D) présent dans la même composition liquide qui est dans l'intervalle de 0,005:1,0 à 0,40:1,0 ; et
(II) de séchage sur place sur la surface métallique des contenus non volatiles de la couche liquide formée dans l'opération (I), de manière à former ledit revêtement solide.

2. Procédé selon la revendication 1, dans lequel dans le composant (D), lesdites molécules sont auto-réticulantes.

3. Procédé selon la revendication 1 ou la revendication 2, dans lequel la composition liquide aqueuse dans l'étape (I) a été fabriquée en mélangeant de l'eau et des sources des composants (A), (B), (C) et (D) ; et dans lequel lesdites sources des composants (A) et (B) sont hydrosolubles.

4. Procédé selon l'une quelconque des revendications précédentes, dans lequel, dans le composant (D), lesdites molécules ont une température de transition vitreuse qui n'est pas supérieure à 75°C.

5. Procédé selon l'une quelconque des revendications précédentes, dans lequel, dans le composant (D), lesdites molécules ont une température de transition vitreuse d'au moins 15°C mais pas supérieure à 55°C.

6. Procédé selon l'une quelconque des revendications précédentes, dans lequel, dans le composant (D), lesdites molécules sont sous la forme de dispersions de latex polymère dans l'eau.

7. Procédé selon l'une quelconque des revendications précédentes, dans lequel, dans le composant (D), lesdites molécules sont choisies à partir du groupe consistant en acides polyacryliques, copolymères styrène-acrylique, et copolymères d'acide acrylique.

8. Procédé selon l'une quelconque des revendications précédentes, dans lequel :
- la couche solide formée dans l'opération (II) possède une masse par unité d'aire de la surface métallique revêtue qui est dans l'intervalle de 0,2 à 10 g/m² ; et
- soit :
- le composant (B) comprend au moins un des éléments bore, silicium, titane, zirconium et hafnium dans des anions qui contiennent également des atomes de fluor, et le rapport de la concentration du total des éléments bore, silicium, titane, zirconium et hafnium dans la composition liquide à partir de laquelle une couche est formée dans l'étape (I) sur la concentration équivalente de manière stoechiométrique des atomes de phosphore du composant (A) dans ladite composition liquide aqueuse est dans l'intervalle de 0,03:1,0 à 2,0:1,0 ;
soit :
- le composant (B) ne comprend aucun des éléments bore, silicium, titane, zirconium et hafnium, et le rapport de la concentration des atomes de fluor dans la composition liquide, à partir de laquelle une couche est formée dans l'étape (1) sur la concentration équivalente de manière stoechiométrique des atomes de phosphore du composant (A) dans la même composition liquide aqueuse est dans l'intervalle de 0,3:1,0 à 7:1,0;
- dans ladite composition liquide aqueuse, le rapport de la concentration du composant (C) sur la concentration équivalente de manière stoechiométrique en H₃PO₄ du composant (A) est dans l'intervalle de 0,02:1,0 à 2,0:1,0 ; et
- dans ladite composition liquide aqueuse, le rapport de la concentration du composant (D) sur la concentration du composant (A) est dans l'intervalle de 0,3;1,0 à 15:1,0.

9. Procédé selon la revendication 8, dans lequel le composant (E) comprend un ou plusieurs matériaux organiques choisis à partir de paraffines solides, de polymères polyéthylènes synthétiques, de polymères polypropylènes synthétiques, de polymères polyéthylènes ou polypropylènes partiellement ou totalement halogénés, et d'autres cires synthétiques ou naturelles.

10. Procédé selon la revendication 8 ou la revendication 9, dans lequel :
- le composant (A) a été fourni à la composition sous forme d'acide orthophosphorique ou au moins sous forme de sel de celui-ci ;
- le composant (B) est choisi parmi des anions avec une des formules chimiques BF₄⁻¹, SiF₆⁻², TiF₆⁻², ZrF₆⁻² et HfF₆⁻² ;
- le composant (C) est choisi parmi des molécules de type (α) où :
- chacun des R² à R⁶, R¹⁰, R¹¹, W¹ et W² est un groupe atome d'hydrogène ;
- chacun des Y¹ à Y⁶ est un groupe atome d'hydrogène ou un groupe Z ;
- moyenné sur le contenu total du composant (C), chaque molécule polymère contient un nombre d'unités correspondant aux formules générales (II), telles que définies ci-dessus, qui est dans l'intervalle de 5 à 50 ;
- moyenné sur le contenu total du composant (C), le nombre de groupes Z possède un rapport sur le nombre de noyaux aromatiques qui est dans l'intervalle de 0,20:1,0 à 2,0:1,0 ;
- moyenné sur le contenu total du composant (C), le nombre de groupes polyhydroxyles Z, qui sont définis comme les groupes Z dans lesquels au moins R⁸, dans les formules générales pour les groupes Z, possède (i) de 4 à 6 atomes de carbone et possède (ii) autant de groupes hydroxyles, chacun attaché à un atome distinct des atomes de carbone, qu'un de moins que le nombre d'atomes de carbone dans le groupe caractéristique R⁸, possède un rapport sur le nombre total de groupes Z dans la composition qui est au moins environ 0,50:1,0 ; et
- R⁷ est un groupe alkyle avec pas plus de 3 atomes de carbone.

11. Procédé selon la revendication 10, dans lequel :
- la couche solide formée dans l'opération (II) possède une masse par unité d'aire de la surface métallique revêtue qui est dans l'intervalle de 0,80 à 4,0 g/m² ;
- le composant (B) comprend au moins un des éléments bore, silicium, titane, zirconium et hafnium dans des anions qui contiennent également des atomes de fluor, et le rapport de la concentration du total des éléments bore, silicium, titane, zirconium et hafnium dans la composition liquide, à partir de laquelle une couche est formée dans l'étape (I), sur la concentration équivalente de manière stoechiométrique des atomes de phosphore du composant (A) est dans l'intervalle de 0,12:1,0 à 0,40:1,0 ;
- dans ladite composition liquide aqueuse, le rapport de la concentration du composant (C) sur la concentration équivalente de manière stoechiométrique en H₃PO₄ du composant (A) est dans l'intervalle de 0,08:1,0 à 0,40:1,0 ; et
- dans ladite composition liquide aqueuse, le rapport de la concentration du composant (D) sur la concentration du composant (A) est dans l'intervalle de 0,9:1,0 à 4,0:1,0 ; et
- la composition liquide contient également le composant (E) d'un matériau solide dispersé de manière stable qui, sous forme isolée, possède un coefficient de friction statique, mesuré entre deux pièces du matériau solide lui-même ou entre le matériau solide et de l'acier laminé à froid, qui n'est pas supérieur à 0,16, ce matériau solide ne faisant partie d'aucun des composants (A) à (D), le volume du composant (E) étant tel qu'un volume égal de polyéthylène haute densité possède une masse avec un rapport sur la masse du composant (D) présent dans la même composition liquide qui est dans l'intervalle de 0,025;1,0 à 10:1,0.

12. Procédé selon la revendication 11, dans lequel :
- la couche solide formée dans l'opération (II) possède une masse par unité d'aire de la surface métallique revêtue qui est dans l'intervalle de 1,5 à 2,5 g/m² ;
- dans ladite composition liquide aqueuse, le composant (B) est l'acide hexafluomtitanique, et le rapport de la concentration en titane dans le composant (B) sur la concentration équivalente de manière stcechiométrique des atomes de phosphore du composant (A) est dans l'intervalle de 0,21:1,0 à 0,35:1,0 ;
- le composant (C) est choisi parmi des polymères de 4-vinyle phénol auquel ont été greffés des groupes caractéristiques Z à partir d'une réaction du formaldéhyde et de la N-méthyle glucamine, et le rapport de la concentration du composant (C) sur la concentration équivalente de manière stcechiométrique en H₃PO₄ du composant (A), est dans l'intervalle de 0,14:1,0 à 0,35:1,0;
- dans ladite composition liquide aqueuse, le rapport de la concentration du composant (D) sur la concentration du composant (A), est dans l'intervalle de 1,5:1,0 à 2,9:1,0; et
- le composant (E) est un polyéthylène haute densité et il possède une masse avec un rapport sur la masse du composant (D), présent dans la même composition liquide, qui est dans l'intervalle de 0,042:1,0 à 0,10:1,0.

13. Procédé selon l'une quelconque des revendications 1 à 9, dans lequel le composant (C) consiste en molécules de type (α) et en molécules de type (β).

14. Procédé selon l'une quelconque des revendications précédentes, dans lequel le composant (E) comprend de plus un agent de dispersion canonique.
